# EUROPÄISCHE PATENTSCHRIFT

(11) **EP 4 370 888 B1**
(45) Veröffentlichungstag und Bekanntmachung des Hinweises auf die Patenterteilung: **11.03.2026**
(21) Anmeldenummer: 22738501.0
(22) Anmeldetag: 11.07.2022
(51) Int. Cl.: G01L 3/10, G01L 5/22

(54) **DREHMOMENTSENSORVORRICHTUNG UND VERFAHREN ZUM ZUSAMMENBAU EINER DREHMOMENTSENSORVORRICHTUNG**
TORQUE-SENSOR DEVICE AND METHOD FOR ASSEMBLING A TORQUE-SENSOR DEVICE
DISPOSITIF CAPTEUR DE COUPLE ET PROCÉDÉ D'ASSEMBLAGE D'UN DISPOSITIF CAPTEUR DE COUPLE

(30) Priorität: 14.07.2021 DE 102021118194
(43) Veröffentlichungstag der Anmeldung: 22.05.2024
(73) Patentinhaber: Valeo Schalter und Sensoren GmbH, 74321 Bietigheim-Bissingen (DE)
(72) Erfinder: FRÖHLICH, Ekkehart, 74321 Bietigheim-Bissingen (DE); SCHOEPE, Roman, 74321 Bietigheim-Bissingen (DE); NIEDEN, Dennis, 74321 Bietigheim-Bissingen (DE); RACHUI, Dirk, 74321 Bietigheim-Bissingen (DE); BALAZS, Emil, 8200 Veszprem (CZ); HORVATH, Marcell, 8200 Veszprem (CZ)
(74) Vertreter: Ralf, Thorge
(86) Internationale Anmeldenummer: PCT/EP2022/069223
(87) Internationale Veröffentlichungsnummer: WO 2023/285333

(56) Entgegenhaltungen:
- WO-A1-2019/016124
- DE-A1- 102017 116 454
- US-A1- 2005 223 820

## Beschreibung

Die vorliegende Erfindung betrifft eine Drehmomentsensorvorrichtung zur Erfassung eines auf eine Welle aufgebrachten Drehmoments, insbesondere zur Erfassung eines auf eine Lenkwelle eines Kraftfahrzeugs aufgebrachten Drehmoments, wobei die Drehmomentsensorvorrichtung eine Magnetanordnung, eine Statoranordnung, eine Flussleiteranordnung und eine Magnetsensoranordnung mit wenigstens einem Magnetsensor aufweist, wobei die Magnetanordnung zum Erzeugen wenigstens eines Magnetfeldes ausgebildet ist, wobei die Flussleiteranordnung wenigstens einen ersten Flussleiter und einen zweiten Flussleiter aufweist und der erste Flussleiter und der zweite Flussleiter jeweils wenigstens eine Übertragungsfläche aufweisen, wobei sich die wenigstens eine Übertragungsfläche des ersten Flussleiters und die wenigstens eine Übertragungsfläche des zweiten Flussleiters derart gegenüberliegen, dass sie einen axialen Spalt zwischen sich bilden, in welchem wenigstens ein Magnetsensor der Magnetsensoranordnung anordbar ist, wobei die Magnetanordnung und die Statoranordnung durch Aufbringen eines Drehmoments derart in Umfangsrichtung um eine Zentrumsachse der Drehmomentsensorvorrichtung relativ zueinander bewegbar sind, dass durch eine Relativbewegung zwischen der Magnetanordnung und der Statoranordnung in Umfangsrichtung ein magnetischer Fluss in der Statoranordnung erzeugbar ist.

Des Weiteren betrifft die vorliegende Erfindung ein Verfahren zum zumindest teilweisen Zusammenbau einer solchen Drehmomentsensorvorrichtung.

Gattungsgemäße Drehmomentsensorvorrichtungen, insbesondere für Lenkwellen von Kraftfahrzeugen, sind aus dem Stand der Technik grundsätzlich bekannt, beispielsweise aus der DE 10 2017 116 454 A1 , der US 2005/223820 A1, der DE 10 2013 006 379 A1 oder der EP 1 269 133 B1.

Derartige Drehmomentsensorvorrichtungen werden beispielsweise bei elektrischen Lenksystemen eingesetzt, um den elektrischen Antriebsmotor des Lenksystems basierend auf einem von einem Fahrer aufgebrachten Lenkmoment anzusteuern, beispielsweise um eine entsprechende Lenkunterstützung bereitzustellen.

In der Regel werden Drehmomentsensorvorrichtungen dazu in Verbindung mit einer axial geteilten Welle und mit einem Torsionsstab mit definierter, bekannter Torsionssteifigkeit eingesetzt, wobei der Torsionsstab dabei einen ersten Teil der axial geteilten Welle mit einem zweiten Teil der axial geteilten Welle verbindet.

Wird ein Drehmoment auf die Welle aufgebracht, bewirkt dies eine Verdrehung der beiden Teile der Welle zueinander um einen messbaren Verdrehwinkel, wobei der Verdrehwinkel sich abhängig vom aufgebrachten Drehmoment und der Steifigkeit des Torsionsstabes einstellt, so dass aus dem erfassten Verdrehwinkel bei definierter, bekannter Steifigkeit des Torsionsstabes das aufgebrachte Drehmoment ermittelt werden kann.

Zur Messung des infolge eines aufgebrachten Drehmoments resultierenden Verdrehwinkels sind verschiedene Messprinzipien und Sensoranordnungen bekannt, wobei sehr häufig magnetische Sensorvorrichtungen oder -systeme zum Einsatz kommen, bei denen eine Magnetanordnung mit wenigstens einem Magnetelement, meistens mit einem umlaufenden, als Permanentmagnet ausgebildeten Ringmagneten, mit dem ersten Teil der Lenkwelle drehfest verbunden ist, und eine Statoranordnung mit einem oder mehreren, magnetisch leitfähigen Statoren drehfest mit dem zweiten Teil der Welle verbunden ist, wobei die Statoranordnung dabei in der Regel in radialer Richtung mit einem kleinen Luftspalt dazwischen konzentrisch um die Magnetanordnung, insbesondere das Magnetelement, herum angeordnet ist. Über die Statoranordnung, welche üblicherweise zwei separate Statoren mit jeweils einem ringscheibenförmigen Bereich umfasst, kann der magnetische Fluss eines mittels der Magnetanordnung erzeugten Magnetfeldes zu einer Magnetsensoranordnung mit wenigstens einem Magnetsensor, beispielsweise einem Hall-Sensor, geleitet werden und ausgewertet werden.

Wird die drehfest mit dem ersten Teil der Welle verbundene Magnetanordnung, insbesondere deren Magnetelement, durch eine Rotationsbewegung der Welle relativ zu der mit dem zweiten Teil der Welle verbundenen Statoranordnung bewegt, ändert sich die magnetische Flussdichte in der Statoranordnung, insbesondere in den einzelnen Statoren, was mittels der Magnetsensoranordnung erfasst werden kann. Die Änderung der magnetischen Flussdichte in der Statoranordnung ist dabei unter anderem abhängig von der Größe der Relativbewegung der Magnetanordnung, insbesondere der jeweiligen Magnetelemente, gegenüber der Statoranordnung, insbesondere gegenüber den einzelnen Statoren, d.h. vom Verdrehwinkel. Somit kann aus der Änderung der erfassten Flussdichte auf den Verdrehwinkel geschlossen werden und aus dem Verdrehwinkel wiederum kann mit Kenntnis der Torsionssteifigkeit des Torsionsstabs das auf die Welle aufgebrachte Drehmoment bestimmt werden.

Durch eine Überlagerung des von der Magnetanordnung der Drehmomentsensorvorrichtung erzeugten Magnetfelds mit einem weiteren Magnetfeld, das für das Magnetfeld der Sensorvorrichtung ein magnetisches Störfeld darstellt, beispielsweise einem Magnetfeld einer weiteren Sensorvorrichtung oder einem in der Umgebung der Drehmomentsensorvorrichtung vorhandenen Magnetfeld, beispielsweise einem Magnetfeld einer in der Nähe befindlichen, elektrischen Maschine, wie beispielsweise das Magnetfeld eines Elektromotors oder Generators, oder von Hochstromleitungen, kann es zu einer unerwünschten Beeinflussung des an die Magnetsensoreinrichtung übertragenen Flusses kommen, insbesondere zu einer durch das weitere Magnetfeld erzeugten Änderung der übertragenen Flussdichte, was zu einem falschen, jedoch plausiblen und damit nicht als fehlerhaft erkannten Sensorsignal führt und infolgedessen zu einem falschen Drehmomentwert.

Zur Reduzierung der Störempfindlichkeit vorbeschriebener, gattungsgemäßer Drehmomentsensorvorrichtungen sind aus dem Stand der Technik verschiedene Maßnahmen bekannt.

Aus der WO 2020/174170 A1 und der WO 2020/174171 A1 sind beispielsweise jeweils Positionssensoren bekannt, insbesondere zum Erfassen der Torsion einer Lenksäule, mit welchen durch eine spezielle Ausgestaltung der Flussleiter eine Verringerung magnetischer Störeinflüsse erreicht werden soll, wobei die beschriebenen Positionssensoren jeweils eine Rotorstruktur, eine Statorstruktur und eine Kollektorstruktur umfassen, wobei die Kollektorstruktur zwei Flussleiter aufweist, die mindestens einen Luftspalt definieren, in dem mindestens ein magnetempfindliches Element angeordnet ist, wobei die Flussleiter und der Luftspalt dazwischen eine magnetische Permeanz definieren, unabhängig von der relativen Radial- und Winkelposition der Statorstruktur in Bezug auf die Kollektorstruktur, und wobei die Flussleiter jeweils einen winkelförmigen Kollektorsektor umfassen und jeder Flussleiter mindestens eine Primärsammelzone aufweist, die von mindestens einer Verlängerung fortgesetzt wird, die mindestens eine sekundäre Sammelzone aufweist, wobei die sekundären Sammelzonen in flachen Verlängerungen bzw. in Polschuhen enden, die die beiden Pole des Luftspalts bilden, und eine transversale Mittelebene des Luftspalts mindestens eine der Verlängerungen schneidet.

Aus der zum Zeitpunkt der Anmeldung noch nicht veröffentlichten EP 20192858.7 der Anmelderin ist ferner eine Drehmomentsensorvorrichtung zur Erfassung eines auf eine Welle aufgebrachten Drehmoments bekannt, welche eine Magnetanordnung, eine Statoranordnung und eine Flussleiteranordnung umfasst, wobei die Flussleiteranordnung einen ersten Flussleiter und einen zweiten Flussleiter aufweist und der erste Flussleiter und der zweite Flussleiter jeweils eine erste Sammelfläche sowie jeweils wenigstens eine Übertragungsfläche aufweisen, wobei der zweite Flussleiter ferner eine mit der wenigstens einen Übertragungsfläche des zweiten Flussleiters magnetisch leitend gekoppelte, zweite Sammelfläche aufweist, wobei der erste Flussleiter und der zweite Flussleiter jeweils derart ausgebildet und derart relativ zueinander angeordnet sind, dass sich, wenn die Drehmomentsensorvorrichtung von einem Stör-Magnetfeld umgeben ist, ein in der ersten Sammelfläche des ersten Flussleiters zumindest teilweise gebündelter und über die wenigstens eine Übertragungsfläche des ersten Flussleiters an den Magnetsensor übertragener erster Stör-Fluss-Anteil, und ein in der zweiten Sammelfläche des zweiten Flussleiters zumindest teilweise gebündelter und über die wenigstens eine Übertragungsfläche des zweiten Flussleiters an den Magnetsensor übertragener zweiter Stör-Fluss-Anteil des zweiten magnetischen Flusses zumindest teilweise aufheben.

Für eine hohe Sensorgenauigkeit sollte bei der Montage einer Drehmomentsensorvorrichtung eine Beschädigung der einzelnen Komponenten vermieden werden, insbesondere eine Beschädigung der Flussleiter, wie beispielsweise ein Verbiegen oder dergleichen. Ferner ist es zum Erreichen einer hohen Sensorgenauigkeit von Vorteil, wenn bei der Montage prozesssicher eine präzise Positionierung bzw. Ausrichtung der einzelnen Komponenten, insbesondere der Flussleiter relativ zueinander bzw. zum Magnetsensor, erreicht werden kann. Dies macht die Montage vorbeschriebener Drehmomentsensorvorrichtungen in der Regel aufwendig bzw. umständlich. Insbesondere die Montage von Drehmomentsensorvorrichtungen mit Flussleitern mit zusätzlichen Sammelflächen, wie sie beispielsweise aus der WO 2020/174170 A1 und der WO 2020/174171 A1 sowie der EP 20192858.7 bekannt sind, ist oftmals eine Herausforderung.

Für eine einfache Montage einer gattungsgemäßen Drehmomentsensorvorrichtung schlägt die DE 10 2005 018 286 A1 vor, die Flussleiter und den Magnetfeldsensor zunächst an einem gemeinsamen Halter vorzumontieren und dann die vormontierte Baugruppe mit den übrigen Komponenten, insbesondere mit dem Statorhalter, den Statorelementen und dem Multipol-Magnetring, zusammenzusetzen.

Aus der DE 10 2016 124 370 A1 ist ferner eine Sensorvorrichtung für eine drehbare Welle bekannt, insbesondere für eine Lenkwelle eines Kraftfahrzeugs, sowie ein entsprechendes Verfahren zum Zusammenbau einer solchen Sensorvorrichtung, wobei die Sensorvorrichtung eine Drehmomentsensoreinrichtung zum Erfassen eines auf die Welle aufgebrachten Drehmoments und eine Lenkwinkelsensoreinrichtung zum Erfassen eines Drehwinkels der Welle aufweist, wobei die Drehmomentsensoreinrichtung wenigstens eine Magneteinrichtung zum Erzeugen eines Magnetfeldes sowie wenigstens einen ersten Magnetsensor zum Erzeugen eines Sensorsignals in Abhängigkeit von einem auf die Welle aufgebrachten Drehmoments aufweist, wobei die Lenkwinkelsensoreinrichtung wenigstens einen mit der Welle drehfest verbindbaren Rotor sowie eine Winkelsensoreinrichtung zum Erzeugen wenigstens eines Sensorsignals in Abhängigkeit von einem Drehwinkel des Rotors aufweist, und wobei die Sensorvorrichtung wenigstens eine, zu einem Sensormodul vormontierte Baugruppe aufweist, und wobei wenigstens der erste Magnetsensor der Drehmomentsensoreinrichtung und die Winkelsensoreinrichtung der Lenkwinkelsensoreinrichtung Teil der zum Sensormodul vormontierten Baugruppe sind.

Vor diesem Hintergrund ist es eine Aufgabe der Erfindung, eine alternative Drehmomentsensorvorrichtung bereitzustellen, insbesondere eine einfacher zu montierende Drehmomentsensorvorrichtung mit einem verringerten Einfluss wenigstens eines, in der Umgebung der Drehmomentsensorvorrichtung vorhandenen, externen magnetischen Störfeldes auf einen zu bestimmenden Drehmomentwert.

Ferner ist es eine Aufgabe der vorliegenden Erfindung, ein alternatives Verfahren zum zumindest teilweisen Zusammenbau einer Drehmomentsensorvorrichtung bereitzustellen, insbesondere ein besonders einfaches Verfahren, welches aber dennoch einen präzisen Zusammenbau bzw. eine präzise Montage einer Drehmomentsensorvorrichtung ermöglicht, und mit welchem sich vor allem auch Drehmomentsensorvorrichtungen präzise und einfach montieren lassen, mit denen sich aufgrund zusätzlich vorhandener Sammelflächen ein Stör-Einfluss eines die Drehmomentsensorvorrichtung umgebenden, Stör-Magnetfeldes reduzieren lässt.

Diese Aufgaben werden durch eine erfindungsgemäße Drehmomentsensorvorrichtung sowie durch ein erfindungsgemäßes Verfahren mit den Merkmalen gemäß den jeweiligen unabhängigen Patentansprüchen gelöst. Vorteilhafte Ausführungen der Erfindung sind Gegenstand der abhängigen Patentansprüche der Beschreibung und der Figuren und werden im Folgenden näher erläutert.

Eine erfindungsgemäße Drehmomentsensorvorrichtung ist zur Erfassung eines auf eine Welle aufgebrachten Drehmoment ausgebildet, insbesondere zur Erfassung eines auf eine Lenkwelle eines Kraftfahrzeugs aufgebrachten Drehmoments, und weist eine Magnetanordnung, eine Statoranordnung, eine Flussleiteranordnung und eine Magnetsensoranordnung mit wenigstens einem Magnetsensor auf. Die Magnetanordnung ist zum Erzeugen wenigstens eines Magnetfeldes ausgebildet und die Flussleiteranordnung weist wenigstens einen ersten Flussleiter und einen zweiten Flussleiter auf, wobei der erste Flussleiter und der zweite Flussleiter jeweils wenigstens eine Übertragungsfläche aufweisen und sich die wenigstens eine Übertragungsfläche des ersten Flussleiters und die wenigstens eine Übertragungsfläche des zweiten Flussleiters derart gegenüberliegen, dass sie einen axialen Spalt zwischen sich bilden, in welchem wenigstens ein Magnetsensor der Magnetsensoranordnung anordbar ist. Die Magnetanordnung und die Statoranordnung sind in einem funktionsgemäßen Verwendungszustand der Drehmomentsensorvorrichtung, insbesondere in einem auf eine Welle montierten Zustand der Drehmomentsensorvorrichtung, durch Aufbringen eines Drehmoments derart in Umfangsrichtung um eine Zentrumsachse der Drehmomentsensorvorrichtung relativ zueinander bewegbar, dass durch eine Relativbewegung zwischen der Magnetanordnung und der Statoranordnung in Umfangsrichtung ein magnetischer Fluss in der Statoranordnung erzeugbar ist.

Eine Drehmomentsensorvorrichtung gemäß der vorliegenden Erfindung umfasst dabei mehrere Baugruppen, darunter wenigstens eine erste Baugruppe mit einem ersten Gehäuseteil und eine zweite Baugruppe mit einem zweiten Gehäuseteil, wobei eine erfindungsgemäße Drehmomentsensorvorrichtung dadurch gekennzeichnet ist, dass die erste vormontierte Baugruppe wenigstens den ersten Gehäuseteil, die Statoranordnung und wenigstens einen Magnetsensor der Magnetsensoranordnung umfasst, die zweite vormontierte Baugruppe wenigstens den zweiten Gehäuseteil, den ersten Flussleiter und den zweiten Flussleiter umfasst, und der zweite Gehäuseteil auf den ersten Gehäuseteil aufschiebbar oder aufsteckbar ist und/oder zumindest teilweise mit dem ersten Gehäuseteil ineinanderschiebbar oder ineinander steckbar ist, wobei beim Aufschieben oder Aufstecken und/oder zumindest teilweisen Ineinanderschieben oder Ineinanderstecken wenigstens ein Magnetsensor derart in den Spalt zwischen den Übertragungsflächen des ersten Flussleiters und des zweiten Flussleiters einführbar ist, dass in einem funktionsgemäß zusammengesetzten Zustand der Drehmomentsensorvorrichtung, in welchem wenigstens die erste vormontierte Baugruppe und die zweite vormontierte Baugruppe funktionsgemäß zusammengesetzt sind, ein in der Statoranordnung erzeugter magnetischer Fluss mittels des Magnetsensors erfassbar ist.

Eine erfindungsgemäße Drehmomentsensorvorrichtung lässt sich besonders einfach und bei geringem Risiko einer Beschädigung der Flussleiter montieren, bei entsprechender Ausgestaltung der Flussleiter auch mit Flussleitern, die eine zumindest teilweise Kompensation eines Stör-Flusses ermöglichen. Ferner lässt sich besonders einfach eine präzise Anordnung der Flussleiteranordnung relativ zur Magnetsensoranordnung erreichen. Über den ersten Gehäuseteil, welcher Teil der ersten vormontierten Baugruppe ist, und über den zweiten Gehäuseteil, welcher Teil der zweiten vormontierten Baugruppe ist, kann besonders einfach und vorteilhaft eine einfache Positionierung und Ausrichtung der Flussleiteranordnung relativ zur Magnetsensoranordnung erreicht werden.

Insbesondere die Vormontage der Magnetsensoranordnung zusammen mit dem ersten Gehäuseteil, der Statoranordnung zu einer ersten vormontierten Baugruppe, jedoch getrennt und unabhängig von der Flussleiteranordnung, welche gemäß eines erfindungsgemäßen Verfahrens mit dem zweiten Gehäuseteil zu einer zweiten Baugruppe vormontiert ist, ermöglicht, eine entsprechende Ausgestaltung der Flussleiteranordnung vorausgesetzt, vor allem bei einer Flussleiteranordnung mit Flussleitern, wie sie beispielsweise aus der WO 2020/174170 A1, der WO 2020/174171 A1 oder der EP 20192858.7 bekannt sind, insbesondere auch bei Flussleitern mit einer zusätzlichen Sammelfläche, insbesondere mit jeweils zwei Sammelflächen, wie aus der EP 20192858.7 bekannt, eine einfache und präzise Montage der Drehmomentsensorvorrichtung, und dies insbesondere außerdem bei einem geringen Beschädigungsrisiko der Flussleiteranordnung.

Durch die Vormontage der beiden Flussleiter bzw. der Flussleiteranordnung mit dem zweiten Gehäuseteil kann die Gefahr von Beschädigungen der Flussleiter bzw. der Flussleiteranordnung, beispielsweise durch Verbiegen der Flussleiter bei der Montage, besonders wirkungsvoll reduziert werden. Umso mehr, je mehr die Flussleiter bzw. die Flussleiteranordnung von dem zweiten Gehäuseteil nach der Vormontage eingehaust sind bzw. je mehr die Flussleiter bzw. die Flussleiteranordnung nach der Vormontage von dem zweiten Gehäuseteil umgeben sind.

Gattungsgemäße Drehmomentsensorvorrichtungen zur Erfassung eines auf eine Welle aufgebrachten Drehmoments, insbesondere zur Erfassung eines auf eine Lenkwelle eines Kraftfahrzeugs aufgebrachten Drehmoments, insbesondere deren Funktionsweise sind einem zuständigen Fachmann aus dem Stand grundsätzlich bekannt. Insbesondere aus der DE 10 2013 006 379 A1 oder der EP 1 269 133 B1, auf die hiermit für weitere Informationen zur grundsätzlichen Funktionsweise einer erfindungsgemäßen Drehmomentsensorvorrichtung ausdrücklich verwiesen wird.

Eine gemäß eine erfindungsgemäßen Verfahrens zusammengebaute Drehmomentsensorvorrichtung bzw. eine erfindungsgemäße Drehmomentsensorvorrichtung ist wie aus dem Stand der Technik grundsätzlich bekannt, insbesondere dazu ausgebildet, mit ihrer Zentrumsachse konzentrisch zur Rotationsachse der Welle auf der Welle befestigt zu werden. Besonders bevorzugt ist eine erfindungsgemäße Drehmomentsensorvorrichtung dabei zur Erfassung eines auf eine Welle aufgebrachten Drehmoments ausgebildet, wobei die Welle einen ersten Teil und einen, relativ zum ersten Teil verdrehbaren, zweiten Teil aufweist und insbesondere der erste Teil und der zweite Teil der Welle mittels eines Torsionsstabs miteinander verbunden sind. Bevorzugt ist eine erfindungsgemäße Drehmomentsensorvorrichtung dabei dazu ausgebildet, die Verdrehung des ersten Teils der Welle gegenüber dem zweiten Teil der Welle zu erfassen. Mit Kenntnis der Torsionssteifigkeit des Torsionsstabs der Welle kann aus der erfassten Verdrehung der Welle das aufgebrachte Drehmoment ermittelt werden.

Bevorzugt bildet die Magnetanordnung dabei eine weitere Baugruppe und weist insbesondere wenigstens ein Magnetelement zum Erzeugen wenigstens eines Magnetfeldes auf und ist, insbesondere das wenigstens eine Magnetelement der Magnetanordnung, insbesondere konzentrisch zur Welle anordbar, d.h. derart, dass die Zentrumsachse der Drehmomentsensorvorrichtung mit der Rotationsachse der Welle fluchtet, wobei die Magnetanordnung, insbesondere das wenigstens eine Magnetelement der Magnetanordnung insbesondere mit einem ersten Teil der Welle drehfest verbindbar ist.

In einer vorteilhaften Ausgestaltung einer erfindungsgemäßen Drehmomentsensorvorrichtung ist insbesondere eine Polung der Magnetanordnung, insbesondere des wenigstens einen Magnetelements, in axialer Richtung konstant. Hierdurch lässt sich das Magnetelement besonders einfach herstellen und damit kostengünstig.

Das wenigstens eine Magnetelement der Magnetanordnung ist dabei vorzugsweise ein Permanentmagnet, insbesondere ein vollständig geschlossener Ringmagnet oder ein ringmagnetähnlicher, in Umfangsrichtung nahezu geschlossener Magnet, wobei das Magnetelement insbesondere mehrere Ringmagnetsegmente gegensätzlicher Polung oder entsprechenden Polpaaren aufweisen kann, die in Umfangsrichtung jeweils mit entgegengesetzter Polung aneinandergrenzend angeordnet sind, wobei insbesondere zwei aneinander angrenzende Abschnitte entgegengesetzter Polung ein Polpaar bilden.

Weist die Magnetanordnung ein oder mehrere weitere Magnetelemente auf, sind diese besonders bevorzugt ebenfalls wie vorbeschrieben ausgebildet und insbesondere konzentrisch zu dem wenigstens einen Magnetelement angeordnet.

Unter einem "ringmagnetähnlichen Magneten" wird vorliegend im Sinne der Erfindung ein Magnet verstanden, insbesondere ein Permanentmagnet, der zwar in Umfangsrichtung nicht vollständig geschlossen ist, aber derart ausgebildet ist, dass er nahezu, insbesondere vollständig, wie ein vollständig geschlossen ausgebildeter Ringmagnet wirkt.

Die Magnetanordnung, die zum Erzeugen wenigstens eines Magnetfeldes ausgebildet ist, ist dabei in einer vorteilhaften Ausgestaltung insbesondere zur Erzeugung eines Nutz-Magnetfeldes ausgebildet, wobei in einem funktionsgemäßen Verwendungszustand der Drehmomentsensorvorrichtung, d.h. insbesondere in einem vollständig auf einer Welle montierten Zustand, durch Aufbringen eines Drehmoments in Umfangsrichtung um eine Zentrumsachse der Drehmomentsensorvorrichtung die Magnetanordnung und die Statoranordnung vorzugsweise derart relativ zueinander bewegbar sind, dass durch die Relativbewegung zwischen der Magnetanordnung und der Statoranordnung in Umfangsrichtung in der Statoranordnung in Abhängigkeit von dem auf die Drehmomentsensorvorrichtung aufgebrachten Drehmoment insbesondere wenigstens ein magnetischer Nutz-Fluss erzeugbar ist. In der Statoranordnung kann ferner in einer vorteilhaften Ausgestaltung bevorzugt außerdem, sofern die Drehmomentsensorvorrichtung von einem Stör-Magnetfeld umgeben ist, in Abhängigkeit von dem die Drehmomentsensorvorrichtung umgebenden Stör-Magnetfeld ein erster magnetischer Stör-Fluss erzeugt werden.

Die Statoranordnung ist vorzugsweise ebenfalls konzentrisch zur Welle anordbar und insbesondere mit einem zweiten Teil der Welle drehfest verbindbar.

In einer vorteilhaften Ausgestaltung einer erfindungsgemäßen Drehmomentsensorvorrichtung ist in einem funktionsgemäßen Verwendungszustand der Drehmomentsensorvorrichtung, d.h. insbesondere in einem vollständig auf einer Welle montierten Zustand, die Statoranordnung insbesondere zumindest teilweise konzentrisch zur Magnetanordnung angeordnet bzw. grundsätzlich derart anordbar, insbesondere konzentrisch zu dem wenigstens einen Magnetelement, wobei die Statoranordnung insbesondere zumindest teilweise außen um die Magnetanordnung herum angeordnet werden kann bzw. ist, vorzugsweise um das wenigstens eine Magnetelement herum und insbesondere mit einem definierten Luftspalt dazwischen.

Die Statoranordnung dient dabei insbesondere dazu und ist vorzugsweise dazu ausgebildet ist, einen magnetischen Fluss des von der Magnetanordnung erzeugten Magnetfeldes an die Flussleiteranordnung zu leiten.

In einer vorteilhaften Ausgestaltung einer erfindungsgemäßen Drehmomentsensorvorrichtung weist die Statoranordnung insbesondere einen ersten Stator und einen zweiten Stator auf, die jeweils konzentrisch zueinander entlang der Zentrumsachse angeordnet sind, wobei in einem funktionsgemäßen Verwendungszustand der Drehmomentsensorvorrichtung durch eine Relativbewegung zwischen der Magnetanordnung und der Statoranordnung in Umfangsrichtung ein magnetischer Fluss in der Statoranordnung erzeugbar ist, insbesondere jeweils ein magnetischer Fluss im ersten Stator und ein magnetischer Fluss im zweiten Stator, insbesondere gleichzeitig.

In einer vorteilhaften Ausgestaltung einer erfindungsgemäßen Drehmomentsensorvorrichtung weist der erste und/oder der zweite Stator insbesondere einen ringscheibenförmigem Statorkörper und sich von diesem in einer axialen Richtung weg erstreckende Laschen auf, wobei die Laschen insbesondere in Umfangsrichtung verteilt angeordnet sind, insbesondere gleichmäßig verteilt mit Abstandslücken dazwischen, wobei sich die Laschen insbesondere jeweils in eine axiale Richtung weg vom zugehörigen Statorkörper erstrecken, wobei der erste Stator und der zweite Stator bevorzugt derart ausgebildet und angeordnet sind, dass sich die Laschen des ersten Stators und des zweiten Stators jeweils in axialer Richtung vom zugehörigen Statorkörper in Richtung des anderen Stators erstrecken und insbesondere jeweils versetzt mit den Laschen des anderen Stators ineinandergreifen.

In einer vorteilhaften Ausgestaltung einer erfindungsgemäßen Drehmomentsensorvorrichtung weist der Statorkörper des ersten und/oder des zweiten Stators insbesondere jeweils einen radial inneren Rand und einen radial äußeren Rand auf, wobei sich die Laschen insbesondere vom radial inneren Rand des ringscheibenförmigen Statorkörpers aus weg erstrecken, insbesondere alle zur gleichen Seite, d.h. in eine gleiche Richtung.

Ferner kann die Statoranordnung weitere Bauteile, wie insbesondere einen Statorhalter und/oder einen oder mehrere Fixierringe aufweisen. In einer vorteilhaften Ausgestaltung weist die Statoranordnung insbesondere einen Statorhalter auf, auf welchen die Statoren aufgeschoben werden können und mittels eines Fixierringes in ihrer axialen Position fixiert werden können. Zur Befestigung des Statorhalters mit den Statoren auf dem einen Teil der Welle, deren Drehmoment erfasst werden soll, kann der Statorhalter insbesondere einen hülsenförmigen Befestigungsabschnitt aufweisen, welcher auf aus dem Stand der Technik bekannte Weise drehfest auf der Welle befestigt werden kann.

Die Anzahl der Polpaare in Umfangsrichtung des wenigstens einen Magnetelements der Magnetanordnung entspricht besonders bevorzugt der Anzahl der Laschen des ersten und/oder des zweiten Stators. Für Drehmomentsensorvorrichtungen für Lenkwellen von Kraftfahrzeugen, insbesondere für den Einsatz in Personenkraftwagen (PKW), hat sich eine Anzahl von 8 Laschen für den ersten Stator und den zweiten Stator als besonders vorteilhaft herausgestellt.

Die Flussleiteranordnung einer erfindungsgemäßen Drehmomentsensorvorrichtung ist insbesondere zur zumindest teilweisen Bündelung und zur Weiterleitung, und vorzugsweise auch zur Verstärkung, eines magnetischen Flusses, insbesondere des in der Statoranordnung erzeugten magnetischen Flusses, an die Magnetsensoranordnung ausgebildet, wobei der erste Flussleiter und/oder der zweite Flussleiter zu diesem Zweck vorzugsweise zusätzlich zu ihrer jeweils wenigstens einen Übertragungsfläche insbesondere ferner jeweils eine erste Sammelfläche aufweisen können, welche insbesondere jeweils zur zumindest teilweisen Bündelung und/oder zur zumindest teilweisen Weiterleitung eines in der Statoranordnung in Abhängigkeit von einem aufgebrachten Drehmoment erzeugten magnetischen Nutz-Flusses und/oder eines in Abhängigkeit von einem die Drehmomentsensorvorrichtung umgebenden Stör-Magnetfeld erzeugten ersten magnetischen Stör-Flusses ausgebildet sein können.

Die wenigstens eine Übertragungsfläche des ersten Flussleiters und die wenigstens eine Übertragungsfläche des zweiten Flussleiters sind derart gegenüberliegend angeordnet, dass sie einen axialen Spalt zwischen sich bilden, insbesondere einen Luftspalt, in dem wenigstens ein Magnetsensor der Magnetsensoranordnung anordbar ist oder in einem funktionsgemäß zusammengebauten Zustand der Drehmomentsensorvorrichtung angeordnet ist, wobei insbesondere in einem gemäß eines erfindungsgemäßen Verfahrens zusammengebauten Zustand der Drehmomentsensorvorrichtung wenigstens ein Magnetsensor der Magnetsensoranordnung in dem Spalt zwischen den Übertragungsflächen angeordnet ist.

Ist wenigstens ein Magnetsensor der Magnetsensoranordnung in dem Spalt angeordnet, kann vorzugsweise über die wenigstens eine Übertragungsfläche des ersten Flussleiters ein im ersten Flussleiter gebündelter erster magnetischer Fluss an den in dem axialen Spalt angeordneten Magnetsensor übertragen werden, wobei der erste magnetische Fluss insbesondere einen Nutz-Fluss-Anteil und/oder einen ersten Stör-Fluss-Anteil enthalten kann, und über die wenigstens eine Übertragungsfläche des zweiten Flussleiters kann bevorzugt ein im zweiten Flussleiter gebündelter, zweiter magnetischer Fluss an den Magnetsensor übertragen werden.

Die Magnetsensoranordnung weist insbesondere wenigstens einen ersten Magnetsensor zum Erfassen des von der Flussleiteranordnung gebündelten, und bevorzugt auch verstärkten, und weitergeleiteten magnetischen Flusses auf, wobei die Magnetsensoranordnung, insbesondere wenigstens ein Magnetsensor der Magnetsensoranordnung, zur Erzeugung eines Sensorsignals in Abhängigkeit von einem auf die Drehmomentsensorvorrichtung aufgebrachten Drehmoment bzw. in Abhängigkeit von einem auf eine mit der Drehmomentsensorvorrichtung verbundenen Welle aufgebrachten Drehmoment ausgebildet ist. Die Magnetsensoranordnung kann dabei einen oder mehrere Magnetsensoren umfassen, insbesondere einen ersten Magnetsensor und ferner einen zweiten Magnetsensor.

Wenigstens ein Magnetsensor, vorzugsweise wenigstens ein erster und ein zweiter Magnetsensor, insbesondere sämtliche Magnetsensoren der Magnetsensoranordnung, ist ein einfacher Hall-Sensor, mit dem eine senkrecht zur Sensorfläche des Hall-Sensors verlaufende magnetische Flussdichte eines Magnetfeldes bzw. ein Anteil der senkrecht zur Sensorfläche verlaufenden magnetischen Flussdichte des Magnetfeldes detektiert werden kann, wobei besonders bevorzugt wenigstens der erste Magnetsensor, insbesondere sämtliche Magnetsensoren gehäusefest angeordnet sind, d.h. stationär bzw. ortsfest gegenüber der drehbaren Welle.

Die Magnetsensoranordnung einer erfindungsgemäßen Drehmomentsensoranordnung kann insbesondere auch zwei oder mehr Magnetsensoren aufweisen, insbesondere einen ersten und einen zweiten Magnetsensor. Dies ermöglicht insbesondere eine redundante Auswertung bzw. Bereitstellung des Drehmomentsensorsignals und damit eine erhöhte Funktionssicherheit der Drehmomentsensorvorrichtung.

Weist eine erfindungsgemäße Drehmomentsensorvorrichtung einen ersten Magnetsensor und einen zweiten Magnetsensor auf, ist der zweite Magnetsensor besonders bevorzugt parallel zum ersten Magnetsensor angeordnet, vorzugsweise in einer Ebene mit dem ersten Magnetsensor, insbesondere in einer senkrecht auf der Zentrumsachse stehenden, gemeinsamen Ebene. Dies ermöglicht die Befestigung der beiden Magnetsensoren auf einer gemeinsamen Platine oder Leiterplatte, insbesondere, wenn die beiden Magnetsensoren SMD-Magnetsensoren sind, wobei sich die Leiterplatte in diesem Fall bevorzugt in einer senkrecht auf der Zentrumsachse stehenden Ebene erstreckt.

Wenigstens ein Flussleiter weist in diesem Fall insbesondere zwei Übertragungsflächen auf, wobei vorzugsweise die beiden Übertragungsflächen eines Flussleiters in einer Ebene angeordnet sind.

Weist die Magnetsensoranordnung mehrere Magnetsensoren auf, weist insbesondere wenigstens ein Flussleiter mehrere Übertragungsflächen auf, insbesondere für jeden Magnetsensor jeweils eine zugehörige Übertragungsfläche, wobei in diesem Fall eine erste Sammelfläche, und falls vorhanden eine zweite Sammelfläche, insbesondere jeweils derart magnetisch leitend mit den Übertragungsflächen des zugehörigen Flussleiters gekoppelt sind, insbesondere magnetisch leitend mit diesen verbunden sind, und der Flussleiter derart ausgebildet ist, dass bevorzugt über jede der Übertragungsflächen jeweils ein im zugehörigen Flussleiter gebündelter und/oder verstärkter magnetischer Fluss gemäß der vorliegenden Erfindung an die Magnetsensoranordnung, insbesondere an einen der jeweiligen Übertragungsfläche zugeordneten Magnetsensor der Magnetsensoranordnung, übertragbar ist. D.h. im Fall von zwei Magnetsensoren weist der erste Flussleiter bevorzugt eine erste Übertragungsfläche und ferner eine zweite Übertragungsfläche zur Übertragung und/oder Weiterleitung des im zugehörigen Flussleiter gebündelten magnetischen Flusses auf.

Es können aber auch mehrere Magnetsensoren benachbart zu ein und derselben Übertragungsfläche angeordnet sein, d.h. einen ersten und/oder zweiten magnetischen Fluss über dieselbe, gemeinsame Übertragungsfläche empfangen. Beispielsweise kann der erste Flussleiter eine für zwei in einer gemeinsamen Ebene angeordnete Übertragungsfläche aufweisen und der zweite Flussleiter ebenfalls eine gemeinsame, gegenüberliegend von der Übertragungsfläche des ersten Flussleiters. Der zweite Flussleiter kann aber beispielsweise auch zwei einzelne separate Übertragungsflächen aufweisen, die jeweils mit der gemeinsamen Übertragungsfläche einen Spalt bilden, in dem jeweils ein Magnetsensor angeordnet oder anordbar ist. Ebenso kann der erste Flussleiter zwei einzelne Übertragungsflächen aufweisen, die gegenüberliegend von zwei einzelnen Übertragungsflächen des zweiten Flussleiters oder gegenüberliegend von einer gemeinsamen Übertragungsfläche des zweiten Flussleiters angeordnet sein können.

Besonders bevorzugt weisen jedoch beide Flussleiter jeweils zwei Übertragungsflächen auf, wobei jeweils eine Übertragungsfläche des ersten Flussleiters parallel zu einer Übertragungsfläche des zweiten Flussleiters angeordnet ist, vorzugsweise übereinander mit einem Spalt dazwischen, in welchen in radialer Richtung jeweils ein Magnetsensor hineinragt. Bevorzugt ist dabei ein erster Magnetsensor insbesondere in einem axialen Spalt zwischen den ersten Übertragungsflächen der beiden Flussleiter angeordnet und erstreckt sich in radialer Richtung in den Spalt zwischen den ersten Übertragungsflächen hinein, insbesondere parallel zu den ersten Übertragungsflächen, während ein zweiter Magnetsensor insbesondere in den axialen Spalt zwischen den zweiten Übertragungsflächen der beiden ersten und zweiten Flussleiter hineinragt.

In einer vorteilhaften Ausgestaltung einer Drehmomentsensorvorrichtung gemäß der vorliegenden Erfindung sind der erste Flussleiter und der zweite Flussleiter, insbesondere die gesamte Flussleiteranordnung, in den zweiten Gehäuseteil eingesetzt und mit diesem verbunden, insbesondere an diesem befestigt, beispielsweise durch Verrasten, Einclipsen, und/oder Verstemmen und/oder zumindest teilweises Umspritzen der Flussleiter bzw. der Flussleiteranordnung. Werden die Flussleiter bzw. die Flussleiteranordnung zumindest teilweise durch teilweises Umspritzen mit dem zweiten Gehäuseteil verbunden, ist es vorteilhaft, wenn der erste Flussleiter und/oder der zweite Flussleiter dazu entsprechende Laschen, insbesondere doppelt abgewinkelte Laschen oder dergleichen, aufweisen.

In einer besonders vorteilhaften Ausgestaltung einer erfindungsgemäßen Drehmomentsensorvorrichtung ist wenigstens der erste Flussleiter und/oder der zweite Flussleiter derart mit dem zweiten Gehäuseteil verbunden, insbesondere an diesem befestigt, dass bei einem Zusammensetzen der ersten vormontierten Baugruppe mit der zweiten vormontierten Baugruppe, insbesondere bei einem Aufschieben oder Aufstecken des zweiten Gehäuseteils auf das erste Gehäuseteil bzw. der zweiten vormontierten Baugruppe auf die erste vormontierte Baugruppe oder bei einem zumindest teilweisen Ineinanderschieben oder Ineinanderstecken, ein Herausfallen der Flussleiter aus dem zweiten Gehäuseteil vermieden wird.

Unter "Aufschieben" wird im Sinne der vorliegenden Erfindung insbesondere ein miteinander Ineingriffbringen der beiden Gehäuseteile durch ein Verschieben der beiden Gehäuseteile relativ zueinander verstanden, insbesondere entlang einer Geraden, bei welchem der zweite Gehäuseteil den ersten Gehäuseteil bereits während des Verschiebens zumindest teilweise von außen umgreift, d.h. vor Erreichen einer Zielposition. Der zweite Gehäuseteil kann dabei insbesondere durch den ersten Gehäuseteil während des Verschiebens geführt werden.

Unter "Aufstecken" wird im Sinne der vorliegenden Erfindung insbesondere ein miteinander Ineingriffbringen der beiden Gehäuseteile durch ein Verschieben der beiden Gehäuseteile relativ zueinander verstanden, insbesondere entlang einer Geraden, bei welchem einer der beiden Gehäuseteile den anderen Gehäuseteil in der Zielposition teilweise von außen umgreift, insbesondere im Wesentlichen erst in der Zielposition.

Unter "Ineinanderschieben" wird im Sinne der vorliegenden Erfindung insbesondere ein miteinander Ineingriffbringen der beiden Gehäuseteile durch ein Verschieben der beiden Gehäuseteile relativ zueinander verstanden, insbesondere entlang einer Geraden, bei welchem ein Gehäuseteil den anderen bereits während des Verschiebens, d.h. vor Erreichen einer Zielposition, zumindest teilweise von außen umgreift und der anderen bereits während des Verschiebens in diesen zumindest teilweise hineinragt. Der äußere Gehäuseteile kann dabei insbesondere durch den inneren Gehäuseteil während des Verschiebens geführt werden.

Unter "Ineinanderstecken" wird im Sinne der vorliegenden Erfindung insbesondere ein miteinander Ineingriffbringen der beiden Gehäuseteile durch ein Verschieben der beiden Gehäuseteile relativ zueinander verstanden, insbesondere entlang einer Geraden, bei welchem ein Gehäuseteil den anderen in der Zielposition zumindest teilweise von außen umgreift und der andere in der Zielposition in diesen zumindest teilweise hineinragt, insbesondere jeweils erst in der Zielposition.

Eine erfindungsgemäße Drehmomentsensorvorrichtung kann in einer möglichen vorteilhaften Ausgestaltung dabei derart ausgebildet sein, insbesondere die erste vormontierte Baugruppe und die zweite vormontierte Baugruppe, dass beim Aufschieben oder Aufstecken des zweiten Gehäuseteils auf den ersten Gehäuseteil bzw. der zweiten vormontierten Baugruppe auf die erste vormontierte Baugruppe bzw. beim zumindest teilweisen Ineinanderschieben oder Ineinanderstecken der ersten und zweiten Gehäuseteile bzw. der beiden vormontierten Baugruppen, wenigstens ein Magnetsensor der Magnetsensoranordnung derart in den Spalt zwischen den Übertragungsflächen des ersten Flussleiters und des zweiten Flussleiters eingeführt wird, dass in einem funktionsgemäß zusammengesetzten Zustand der Drehmomentsensorvorrichtung, in welchem wenigstens die erste vormontierte Baugruppe und die zweite vormontierte Baugruppe funktionsgemäß zusammengesetzt sind, ein in der Statoranordnung erzeugter magnetischer Fluss mittels des Magnetsensors erfasst werden kann. Hierdurch kann auf besonders einfache Art und Weise nicht nur eine einfache Montage der Flussleiter, insbesondere eine einfache und präzise Positionierung der Flussleiter erreicht werden, sondern außerdem auf eine einfache Art und Weise eine präzise Positionierung der Flussleiter relativ zu wenigstens einem Magnetsensor.

Eine erfindungsgemäße Drehmomentsensorvorrichtung kann in einer anderen, möglichen, insbesondere alternativen vorteilhaften Ausgestaltung aber bereits zusammengesetzt sein, wobei insbesondere die erste vormontierte Baugruppe und die zweite vormontierte Baugruppe bereits zusammengesetzt sein können, insbesondere funktionsgemäß bzw. verwendungsgemäß. Dabei ist bevorzugt der zweite Gehäuseteil auf den ersten Gehäuseteil bzw. die zweite vormontierte Baugruppe auf die erste vormontierte Baugruppe aufgeschoben oder aufgesteckt bzw. die beiden ersten und zweiten Gehäuseteile bzw. die beiden ersten und zweiten vormontierten Baugruppen sind zumindest teilweise ineinandergeschoben oder ineinandergesteckt, so dass wenigstens ein Magnetsensor der Magnetsensoranordnung derart in den Spalt zwischen den Übertragungsflächen des ersten Flussleiters und des zweiten Flussleiters eingeführt ist, dass in einem funktionsgemäß zusammengesetzten Zustand der Drehmomentsensorvorrichtung ein in der Statoranordnung erzeugter magnetischer Fluss mittels des Magnetsensors erfasst werden kann. D.h. eine erfindungsgemäße Drehmomentsensorvorrichtung kann als Bausatz vorliegen mit wenigstens zwei separaten, vormontierten Baugruppen: der ersten vormontierten Baugruppe und der zweiten vormontierten Baugruppe. Die Magnetanordnung kann eine weitere separate Baugruppe bilden. Oder aber die Baugruppen können bereits zusammengesetzt sein, wobei insbesondere die erste vormontierte Baugruppe und die zweite vormontierte Baugruppe zusammengesetzt sind. Auch können die erste Baugruppe und die zweite Baugruppe in einer weiteren möglichen Ausgestaltung bereits mit der Magnetanordnung zusammengesetzt sein. Die Magnetanordnung kann aber auch noch nicht mit der ersten und zweiten Baugruppe zusammengesetzt sein, auch wenn die erste und zweite Baugruppe schon zusammengesetzt sind.

In einer weiteren möglichen, insbesondere vorteilhaften Ausgestaltung einer Drehmomentsensorvorrichtung gemäß der vorliegenden Erfindung ist die zweite vormontierte Baugruppe in einer sich senkrecht zur Zentrumsachse der Drehmomentsensorvorrichtung erstreckenden Ebene in tangentialer Richtung oder in einer sich senkrecht zur Zentrumsachse der Drehmomentsensorvorrichtung erstreckenden Ebene in radialer Richtung auf den ersten Gehäuseteil aufschiebbar oder aufsteckbar und/oder zumindest teilweise mit dem ersten Gehäuseteil ineinanderschiebbar oder ineinander steckbar. Dies ermöglicht eine besonders einfache Montage bei einer einfachen Ausgestaltung der einzelnen Komponenten, insbesondere der beiden Gehäuseteile.

Sämtliche Richtungsangaben in dieser Anmeldung wie axial, tangential oder radial beziehen sich jeweils auf die Zentrumsachse der Drehmomentsensorvorrichtung. In axialer Richtung meint somit folglich eine Richtung entlang oder parallel zur Zentrumsachse. In radialer Richtung meint entsprechend eine Richtung in einer senkrecht auf der Zentrumsachse stehenden Ebene senkrecht zur Zentrumsachse, aber die Zentrumsachse schneidend. In tangentialer Richtung meint entsprechend in einer Richtung, die senkrecht auf einer radialen Richtung und einer axialen Richtung steht. Ein "axialer Spalt" ist folglich ein Spalt in axialer Richtung, also ein Spalt, welcher sich in axialer Richtung erstreckt, d.h. in einer Richtung parallel zur Zentrumsachse der Drehmomentsensorvorrichtung. Die Richtungsangabe "Umfangsrichtung" bezieht sich entsprechend auf eine Rotationsrichtung um diese Rotations- bzw. Zentrumsachse.

In einer weiteren möglichen, insbesondere vorteilhaften Ausgestaltung einer Drehmomentsensorvorrichtung gemäß der vorliegenden Erfindung ist der zweite Gehäuseteil zumindest an einer Unterseite zumindest teilweise geöffnet, wobei vorzugsweise wenigstens der erste Flussleiter und/oder der zweite Flussleiter, insbesondere die gesamte Flussleiteranordnung, von der geöffneten Unterseite her in den zweiten Gehäuseteil eingebracht ist, insbesondere eingesetzt ist, und wobei sich die Unterseite des zweiten Gehäuseteils wenigstens im Wesentlichen in einer Ebene parallel zu einer Tangente eines Kreises um die Zentrumsachse der Drehmomentsensorvorrichtung erstreckt. Hierdurch lässt sich eine einfache Montage der Drehmomentsensorvorrichtung und eine besonders kompakte und damit platzsparende Ausgestaltung erreichen.

In einer weiteren möglichen, insbesondere vorteilhaften Ausgestaltung einer Drehmomentsensorvorrichtung gemäß der vorliegenden Erfindung, insbesondere in einer Weiterbildung, kann der zweite Gehäuseteil auch an der Unterseite und an der Seite geöffnet sein, wobei wenigstens der erste Flussleiter und/oder der zweite Flussleiter, insbesondere die gesamte Flussleiteranordnung, von der geöffneten Unterseite her oder von der geöffneten Seite her in den zweiten Gehäuseteil eingebracht worden ist, insbesondere eingesetzt worden ist, und wobei sich die geöffnete Seite des zweiten Gehäuseteils wenigstens im Wesentlichen senkrecht zu der Tangente des Kreises um die Zentrumsachse der Drehmomentsensorvorrichtung erstreckt. Hierdurch lässt sich eine besonders einfache Montage der Drehmomentsensorvorrichtung und ebenfalls eine besonders kompakte und damit platzsparende Ausgestaltung erreichen.

Unter einer Unterseite des zweiten Gehäuseteils wird im Sinne der vorliegenden Erfindung insbesondere eine in einem funktionsgemäß zusammengesetzten Zustand der Drehmomentsensorvorrichtung der Zentrumsachse zugewandte Seite des zweiten Gehäuseteils verstanden. Eine "Seite" des zweiten Gehäuseteils ist insbesondere eine sich im Wesentlichen rechtwinklig dazu erstreckende äußere Seite bzw. "Begrenzung" des Gehäuseteils.

In einer weiteren möglichen, insbesondere vorteilhaften Ausgestaltung einer Drehmomentsensorvorrichtung gemäß der vorliegenden Erfindung weisen der erste Gehäuseteil und/oder der zweite Gehäuseteil Mittel zum Ausrichten der beiden Gehäuseteile relativ zueinander und/oder zur Führung und/oder zum Ausrichten während eines Zusammensetzens auf, insbesondere zur Führung und/oder zum Ausrichten während eines Verschiebens der zweiten vormontierten Baugruppe von einer Eingriffsposition in eine Zielposition. Dazu können der erste Gehäuseteil und/oder der zweite Gehäuseteil beispielsweise ein oder mehrere Anschlagelemente und/oder Führungselemente, wie beispielsweise ein oder mehrere Führungsschienen, Führungsnuten, Führungspins, Positionierstifte und/oder Positionierstiftaufnahmen oder dergleichen aufweisen, wobei die zu diesem Zweck an jeweils einem der beiden Gehäuseteile vorgesehenen Mittel insbesondere korrespondierend zu den jeweils am anderen Gehäuseteil vorgesehenen Mittel zu diesem Zweck ausgebildet sind und mit diesen jeweils in Eingriff gebracht werden können.

Zum Fixieren, insbesondere des zweiten Gehäuseteils in der Zielposition, können der erste Gehäuseteil und/oder der zweite Gehäuseteil insbesondere Rastmittel aufweisen, wie beispielsweise ein oder mehrere Rastnasen, Rastvorsprünge, Rasthaken oder dergleichen, und/oder Clips aufweisen und/oder ein oder mehrere Schraubenaufnahmen und miteinander verschraubbar ausgebildet sein und/oder verklebbar ausgebildet sein oder anderweitig fixierbar.

In einer weiteren möglichen, insbesondere vorteilhaften Ausgestaltung einer Drehmomentsensorvorrichtung gemäß der vorliegenden Erfindung, insbesondere in einer Weiterbildung, weist die Magnetsensoranordnung ferner eine Leiterplatte auf, insbesondere eine sich senkrecht zur Zentrumsachse erstreckende Leiterplatte, wobei wenigstens ein Magnetsensor an der Leiterplatte befestigt ist und die Leiterplatte eine Aussparung, insbesondere eine geschlitzte Ausnehmung oder eine Durchgangsöffnung, oder einen Bereich mit reduzierter Dicke gegenüber einem umgebenden Bereich aufweist, wobei der wenigstens eine an der Leiterplatte befestigte Magnetsensor im Bereich der Aussparung oder im Bereich mit der reduzierten Dicke angeordnet ist, und wobei sich der wenigstens eine Magnetsensor der Magnetsensoranordnung und die Aussparung oder der Bereich mit der reduzierten Dicke der Leiterplatte im Spalt zwischen den Übertragungsflächen der beiden Flussleiter befindet. Hierdurch kann auf einfache Art und Weise ein Abstand zwischen beiden, sich gegenüberliegenden Übertragungsflächen bzw. eine Spaltbreite in axialer Richtung reduziert, insbesondere minimiert, werden, was sich insbesondere vorteilhaft auf die Bauhöhe der Drehmomentsensorvorrichtung in axialer Richtung im Bereich des Magnetsensors auswirkt.

In einer besonders bevorzugten Ausgestaltung einer erfindungsgemäßen Drehmomentsensorvorrichtung ist dabei jedem Magnetsensor eine Aussparung oder ein Bereich mit reduzierter Dicke zugeordnet.

Eine Dickenreduzierung der Leiterplatte kann beispielsweise durch entsprechende, insbesondere an einer Unterseite der Leiterplatte eingebrachte Nuten oder eine oder mehrere Aussparungen in diesem Bereich erreicht werden, in welche insbesondere die der Unterseite der Leiterplatte zugewandten Übertragungsflächen eingreifen bzw. hineinragen können.

Vorzugsweise ist wenigstens eine Übertragungsfläche wenigstens eines Flussleiters bzw. wenigstens ein Übertragungsabschnitt eines Flussleiters dabei im Bereich der Aussparung angeordnet, insbesondere zumindest teilweise in einer Ebene mit Leiterplatte.

Ist eine Aussparung vorgesehen, erstreckt sich diese besonders bevorzugt in tangentialer Richtung oder in radialer Richtung und ist insbesondere ein sich in tangentialer Richtung oder in radialer Richtung erstreckender Schlitz ist oder eine U-förmige oder rechteckförmige, an einer kurzen Seite geöffnete Aussparung, wobei die Aussparung insbesondere ein sich in tangentialer Richtung erstreckender Schlitz ist, wenn die zweite vormontierte Baugruppe durch tangentiales Verschieben mit der ersten Baugruppe zusammengesetzt werden kann bzw. worden ist, und ein radialer Schlitz, wenn die zweite vormontierte Baugruppe durch radiales Verschieben mit der ersten Baugruppe zusammengesetzt werden kann bzw. worden ist.

Ein "tangentialer Schlitz" ist dabei ein Schlitz, in den eine Übertragungsfläche bzw. ein Übertragungsabschnitt einer der Flussleiter durch tangentiales Verschieben von der Öffnungsseite des Schlitzes her eingeführt werden kann. Ein "radialer Schlitz" ist entsprechend ein Schlitz, in den eine Übertragungsfläche bzw. ein Übertragungsabschnitt einer der Flussleiter durch radiales Verschieben von der Öffnungsseite des Schlitzes her eingeführt werden kann.

Besonders bevorzugt ist eine erfindungsgemäße Drehmomentsensorvorrichtung derart ausgebildet, dass die Magnetsensoren in einer Ebene angeordnet sind, insbesondere auf ein- und derselben Leiterplatte oder Platine. Hierdurch ergibt sich eine besonders vorteilhafte Ausgestaltung einer erfindungsgemäßen Drehmomentsensorvorrichtung. Werden SMD-Magnetsensoren verwendet, kann eine Drehmomentsensorvorrichtung mit einer geringen Bauhöhe und damit einem geringen Bauraumbedarf in axialer Richtung, d.h. in Richtung der Zentrumsachse, bereitgestellt werden.

In einer besonders vorteilhaften Ausgestaltung einer erfindungsgemäßen Drehmomentsensorvorrichtung ist, da besonders platz- bzw. bauraumsparend, insbesondere wenigstens ein Magnetsensor der Magnetsensoranordnung, insbesondere wenigstens ein erster und ein zweiter Magnetsensor, jeweils ein SMD-Magnetsensor, wobei der Magnetsensor insbesondere auf einer Leiterplatte angeordnet ist, die mit ihrer Leiterplattenebene normal zur Zentrumsachse der Statoranordnung bzw. der Drehmomentsensorvorrichtung orientiert angeordnet ist. Hierdurch lässt sich eine besonders kompakte Ausgestaltung einer erfindungsgemäßen Drehmomentsensorvorrichtung erreichen.

"SMD" steht für Surface-Mount Device (oberflächenmontiertes Bauelement), wobei SMD-Bauteile im Gegensatz vorbeschriebenen "bedrahteten" Bauteilen, die für die Durchsteckmontage (Through Hole Technology, THT) vorgesehen sind, keine Drahtanschlüsse aufweisen, sondern mittels lötfähiger Übertragungsflächen direkt auf eine Leiterplatte gelötet werden können.

In einer alternativen Ausgestaltung einer erfindungsgemäßen Drehmomentsensorvorrichtung kann aber auch wenigstens ein Magnetsensor der Magnetsensoranordnung ein bedrahteter Magnetsensor mit Anschlusspins sein, wobei der Magnetsensor in diesem Fall bevorzugt derart angeordnet ist, dass die Anschlusspins in radialer Richtung nach außen zeigen. Hierdurch lässt sich auch mit einem oder mehreren bedrahteten Magnetsensoren eine kompakte Anordnung erreichen, insbesondere wenn die Anschlusspins des bedrahteten Magnetsensors auf eine Leiterplatte gelötet sind, die mit ihrer Leiterplattenebene parallel zur Zentrumsachse der Statoranordnung bzw. der Drehmomentsensorvorrichtung orientiert angeordnet ist. Alternativ können die Anschlusspins auch mit einem Stanzgitter verbunden sein, insbesondere direkt in dieses eingesteckt sein, insbesondere mit einem Stanzgitter, das mit seiner Stanzgitterebene parallel zur Zentrumsachse der Statoranordnung orientiert angeordnet ist. Hierdurch lässt sich auch mit bedrahteten Magnetsensoren eine kompakte Anordnung erreichen.

In einer weiteren möglichen, insbesondere vorteilhaften Ausgestaltung einer Drehmomentsensorvorrichtung gemäß der vorliegenden Erfindung, ist in der Statoranordnung in Abhängigkeit von dem auf die Drehmomentsensorvorrichtung aufgebrachten Drehmoment ein magnetischer Nutz-Fluss erzeugbar ist und ferner in Abhängigkeit von einem die Drehmomentsensorvorrichtung umgebenden Stör-Magnetfeld ein erster magnetischer Stör-Fluss, wobei der erste Flussleiter und der zweite Flussleiter ferner jeweils eine erste Sammelfläche aufweisen, die jeweils zur zumindest teilweisen Bündelung und/oder zur zumindest teilweisen Weiterleitung des in der Statoranordnung in Abhängigkeit von einem aufgebrachten Drehmoment erzeugten magnetischen Nutz-Flusses und/oder des in Abhängigkeit von einem die Drehmomentsensorvorrichtung umgebenden Stör-Magnetfeld erzeugten ersten magnetischen Stör-Flusses ausgebildet sind, wobei die Flussleiteranordnung, insbesondere der erste Flussleiter und/oder der zweite Flussleiter, ferner vorzugsweise wenigstens eine mit wenigstens einer Übertragungsfläche magnetisch leitend gekoppelte, zweite Sammelfläche aufweist, die zur Erzeugung bzw. zur zumindest teilweisen Bündelung und/oder Weiterleitung eines zweiten magnetischen Stör-Flusses in Abhängigkeit von einem die Drehmomentsensorvorrichtung umgebenden Stör-Magnetfeld ausgebildet ist, und wobei die Flussleiteranordnung insbesondere derart ausgebildet ist, dass sich, wenn die Drehmomentsensorvorrichtung von einem Stör-Magnetfeld umgeben ist, ein in der ersten Sammelfläche eines der Flussleiter zumindest teilweise gebündelter und über die wenigstens eine zugehörige Übertragungsfläche dieses Flussleiters an den Magnetsensor übertragener erster Stör-Fluss-Anteil und ein in der zweiten Sammelfläche zumindest teilweise gebündelter und über eine zugehörige Übertragungsfläche des anderen Flussleiters an den Magnetsensor übertragener zweiter Stör-Fluss-Anteil des magnetischen Flusses zumindest teilweise aufheben, insbesondere in dem von den Übertragungsflächen gebildeten Spalt.

Dazu sind besonders bevorzugt der erste Flussleiter und der zweite Flussleiter entsprechend ausgebildet und entsprechen relativ zueinander angeordnet. Dieser Effekt lässt sich grundsätzlich mit einer Flussleiteranordnung erreichen, wie sie beispielsweise bei den in der WO 2020/174170 A1 oder der WO 2020/174171 A1 beschriebenen Drehmomentsensorvorrichtungen ausgestaltet sind oder mit einer Flussleiteranordnung gemäß der EP 20192858.7, auf welche insbesondere für weitere Details bezüglich der Störkompensation an sich verwiesen wird.

Statt jeweils Z-Förmig gebogen zu sein, wie insbesondere in der EP 20192858.7 gezeigt, d.h. mit sich in radialer Richtung nach außen erstreckender zweiter Sammelfläche, können einer oder beide Flussleiter auch U-förmig gebogen sein, so dass sich die zweiten Sammelflächen in radialer Richtung nach innen erstrecken, wie in den beiliegenden Figuren dieser Anmeldung gezeigt.

Wichtig bei einer bevorzugten Ausgestaltung mit einer einen magnetischen Störeinfluss reduzierenden Ausgestaltung der Flussleiter ist lediglich, dass eine beschriebene Störkompensation zumindest teilweise erreicht wird und dass das erfindungsgemäße Zusammensetzen nach der Vormontage der beiden Baugruppen möglich ist, insbesondere durch tangentiales oder radiales Verschieben der zweiten vormontierten Baugruppe relativ zur ersten vormontierten Baugruppe.

In einer besonders vorteilhaften Ausgestaltung weist zu vorbeschriebenem Zweck der Reduzierung des Störeinflusses eines Stör-Magnetfeldes in der Umgebung der Drehmomentsensorvorrichtung der zweite Flussleiter eine mit der wenigstens einen Übertragungsfläche des zweiten Flussleiters magnetisch leitend gekoppelte, zweite Sammelfläche auf, die zur Erzeugung bzw. zur zumindest teilweisen Bündelung und Weiterleitung eines zweiten magnetischen Stör-Flusses in Abhängigkeit von einem die Drehmomentsensorvorrichtung umgebenden Stör-Magnetfeld ausgebildet ist, wobei der erste Flussleiter und der zweite Flussleiter jeweils derart ausgebildet und derart relativ zueinander angeordnet sind, dass sich, wenn die Drehmomentsensorvorrichtung von einem Stör-Magnetfeld umgeben ist, ein in der ersten Sammelfläche des ersten Flussleiters zumindest teilweise gebündelter und über die wenigstens eine Übertragungsfläche des ersten Flussleiters an den Magnetsensor übertragener erster Stör-Fluss-Anteil des ersten magnetischen Flusses, und ein in der zweiten Sammelfläche des zweiten Flussleiters zumindest teilweise gebündelter und über die wenigstens eine Übertragungsfläche des zweiten Flussleiters an den Magnetsensor übertragener zweiter Stör-Fluss-Anteil des zweiten magnetischen Flusses zumindest teilweise aufheben, insbesondere in dem von den Übertragungsflächen gebildeten Spalt.

In einer besonders vorteilhaften Ausgestaltung einer Drehmomentsensorvorrichtung gemäß der vorliegenden Erfindung weist der erste Flussleiter ferner ebenfalls eine zweite Sammelfläche auf, wobei die zweite Sammelfläche des ersten Flussleiters mit der wenigstens einen Übertragungsfläche des ersten Flussleiters magnetisch leitend gekoppelt ist und ebenfalls zur Erzeugung bzw. zur zumindest teilweisen Bündelung und Weiterleitung eines zweiten magnetischen Stör-Flusses in Abhängigkeit von einem die Drehmomentsensorvorrichtung umgebenden Stör-Magnetfeld ausgebildet ist, wobei der erste Flussleiter und der zweite Flussleiter jeweils derart ausgebildet und derart relativ zueinander angeordnet sind, dass sich, wenn die Drehmomentsensorvorrichtung von einem Stör-Magnetfeld umgeben ist, ein in der ersten Sammelfläche des zweiten Flussleiters zumindest teilweise gebündelter und über die wenigstens eine Übertragungsfläche des zweiten Flussleiters an den Magnetsensor übertragener erster Stör-Fluss-Anteil des zweiten magnetischen Flusses, und ein in der zweiten Sammelfläche des ersten Flussleiters teilweise gebündelter und über die wenigstens eine Übertragungsfläche des ersten Flussleiters an den Magnetsensor übertragener zweiter Stör-Fluss-Anteil des ersten magnetischen Flusses zumindest teilweise aufheben.

Mittels einer derartigen Flussleiteranordnung mit wenigstens einem Flussleiter mit zwei Sammelflächen kann jeweils ein durch ein Stör-Magnetfeld erzeugter und in der Flussleiteranordnung gebündelter, magnetischer Fluss, der zu einer unerwünschten Beeinflussung bzw. Verfälschung eines von der Drehmomentsensorvorrichtung erzeugten Drehmomentsensorsignals führt bzw. führen würde, reduziert bzw. bei entsprechender Ausgestaltung der Flussleiteranordnung und einem entsprechend ausgebildeten externen Stör-Magnetfeld, d.h. bei einem entsprechend insbesondere hinsichtlich seiner Richtung ausgebildeten, die Drehmomentsensorvorrichtung umgebenden Stör-Magnetfeld, sogar vollständig eliminiert werden. Und dies insbesondere ohne einen zweiten, zwingend erforderlichen Magnetsensor und/oder ein zweites Magnetelement und/oder ohne einen zusätzlichen Stator, wie es die vorstehend beispielhalber genannten Lösungen aus dem Stand der Technik beispielsweise vorschlagen.

Insbesondere durch eine vorteilhafte Anordnung der beiden Sammelflächen sowie der Übertragungsfläche des zweiten Flussleiters relativ zu der wenigstens einen Übertragungsfläche und der Sammelfläche des ersten Flussleiters lässt sich, insbesondere in Verbindung mit einer vorteilhaften Abstimmung der Größen der Sammelflächen, ein durch ein umgebendes Stör-Magnetfeld erzeugter Stör-Fluss-Anteil reduzieren und in einigen Fällen sogar vollständig kompensieren.

Vorzugsweise sind der erste Flussleiter und der zweite Flussleiter, insbesondere deren Sammelfläche(n) und Übertragungsfläche(n) jeweils derart ausgebildet und derart relativ zueinander angeordnet und derart magnetisch leitend miteinander gekoppelt und besonders bevorzugt derart größenmäßig aufeinander und relativ zur Größe der jeweiligen Flächen des anderen Flussleiters abgestimmt, dass der durch das Stör-Magnetfeld erzeugte und gebündelte erste Stör-Fluss-Anteil und der durch das Stör-Magnetfeld erzeugte und gebündelte zweite Stör-Fluss-Anteil im Spalt zwischen den Übertragungsflächen vorzugsweise in entgegengesetzten Richtungen orientiert sind und insbesondere einen gleichen Betrag bzw. die gleiche Stärke aufweisen, d.h. gleich groß sind.

Wenigstens eine zweite Sammelfläche kann dabei jeweils integral mit zugehörigem Flussleiter ausgebildet sein, insbesondere einstückig, oder aber als separates Bauteil und lediglich magnetisch leitend mit dem zugehörigen Flussleiter ausgebildet sein. Ist die zweite Sammelfläche als separates Bauteil ausgebildet, ist sie bzw. wird sie vorzugsweise mit den beiden Flussleitern und dem zweitem Gehäuseteil zu der zweiten Baugruppe vormontiert.

Für weitere Details zu möglichen Ausgestaltungen der Flussleiter wird hiermit auf die EP 20192858.7 verwiesen.

In einer besonders vorteilhaften Ausgestaltung einer erfindungsgemäßen Drehmomentsensorvorrichtung sind der erste Statorkörper und der zweite Statorkörper dabei insbesondere in axialer Richtung beabstandet zueinander angeordnet und wenigstens ein Flussleiter zumindest teilweise in axialer Richtung dazwischen.

Grundsätzlich ist aber auch die Anordnung wenigstens eines Flussleiters in axialer Richtung, d.h. entlang der Zentrumsachse, außerhalb der Statoranordnung möglich. Die Sammelflächen und die Übertragungsfläche(n) sind aber jeweils derart auszubilden und derart orientiert anzuordnen, dass sich die jeweils von den Sammelflächen gebündelten magnetischen Flüsse, die durch ein umgebendes Stör-Magnetfeld erzeugt werden, erfindungsgemäß zumindest teilweise aufheben, bevorzugt nahezu vollständig oder vollständig.

In einer vorteilhaften Ausgestaltung einer erfindungsgemäßen Drehmomentsensorvorrichtung weist die Drehmomentsensorvorrichtung insbesondere außerdem eine Steuerungseinrichtung auf, die dazu ausgebildet ist, in Abhängigkeit von dem mittels der Magnetsensoranordnung erfassten magnetischen Fluss bzw. in Abhängigkeit von einem in Abhängigkeit von dem erfassten magnetischen Fluss erzeugten Sensorsignal, ein auf eine mit der Drehmomentsensorvorrichtung funktionsgemäß verbundenen Welle aufgebrachtes Drehmoment zu bestimmen.

In einer weiteren möglichen, besonders vorteilhaften Ausgestaltung einer erfindungsgemäßen Drehmomentsensorvorrichtung, ist die Drehmomentsensorvorrichtung gemäß eines erfindungsgemäßen Verfahrens zusammengesetzt.

Ein erfindungsgemäßes Verfahren zum zumindest teilweisen Zusammenbau einer Drehmomentsensorvorrichtung zur Erfassung eines auf eine Welle um eine Rotationsachse der Welle aufgebrachten Drehmoments, insbesondere zum zumindest teilweisen Zusammenbau einer Drehmomentsensorvorrichtung zur Erfassung eines auf eine Lenkwelle eines Kraftfahrzeugs aufgebrachten Drehmoments, wobei die Drehmomentsensorvorrichtung eine Magnetanordnung, eine Statoranordnung, eine Flussleiteranordnung und eine Magnetsensoranordnung mit wenigstens einem Magnetsensor aufweist, wobei die Magnetanordnung zum Erzeugen wenigstens eines Magnetfeldes ausgebildet ist, wobei die Flussleiteranordnung wenigstens einen ersten Flussleiter und einen zweiten Flussleiter aufweist und der erste Flussleiter und der zweite Flussleiter jeweils wenigstens eine Übertragungsfläche aufweisen, und wobei die Drehmomentsensorvorrichtung ferner einen ersten Gehäuseteil und einen zweiten Gehäuseteil aufweist, ist gekennzeichnet durch die Schritte:
a) Vormontieren einer ersten Baugruppe, die wenigstens den ersten Gehäuseteil sowie die Statoranordnung und wenigstens einen Magnetsensor der Magnetsensoranordnung umfasst,
b) Vormontieren einer zweiten Baugruppe, die wenigstens den zweiten Gehäuseteil und den ersten Flussleiter und den zweiten Flussleiter umfasst, wobei der erste Flussleiter und der zweite Flussleiter derart mit dem zweiten Gehäuseteil verbunden werden, dass sich die wenigstens eine Übertragungsfläche des ersten Flussleiters und die wenigstens eine Übertragungsfläche des zweiten Flussleiters derart gegenüberliegen, dass sie einen axialen Spalt zwischen sich bilden, in dem wenigstens ein Magnetsensor der Magnetsensoranordnung anordbar ist,
c) Zusammensetzen der ersten vormontierten Baugruppe und der zweiten vormontierten Baugruppe, wobei der wenigstens eine Magnetsensor der Magnetsensoranordnung derart in den Spalt zwischen den Übertragungsflächen des ersten Flussleiters und des zweiten Flussleiters eingeführt wird, dass ein in der Statoranordnung erzeugter magnetischer Fluss mittels des Magnetsensors erfassbar ist, und
d) Fixieren der beiden vormontierten Baugruppen in ihrer Position relativ zueinander.

Mittels eines erfindungsgemäßen Verfahrens lässt sich ein besonders einfacher Zusammenbau einer Drehmomentsensorvorrichtung erreichen, insbesondere besonders einfach eine präzise Anordnung der Flussleiteranordnung relativ zur Magnetsensoranordnung. Denn über den ersten Gehäuseteil, welcher Teil der ersten vormontierten Baugruppe ist, und über den zweiten Gehäuseteil, welcher Teil der zweiten vormontierten Baugruppe ist, lässt sich besonders einfach und vorteilhaft eine einfache Positionierung und Ausrichtung der Flussleiteranordnung relativ zur Magnetsensoranordnung erreichen.

Die Vormontage der Magnetsensoranordnung zusammen mit einem ersten Gehäuseteil und der Statoranordnung zu einer ersten vormontierten Baugruppe in Schritt a), jedoch getrennt und unabhängig von der Flussleiteranordnung, welche gemäße eines erfindungsgemäßen Verfahrens mit einem zweiten Gehäuseteil zu einer zweiten Baugruppe vormontiert wird, ermöglicht, eine entsprechende Ausgestaltung der Flussleiteranordnung vorausgesetzt, vor allem bei einer Flussleiteranordnung mit Flussleitern, wie sie beispielsweise aus der WO 2020/174170 A1, der WO 2020/174171 A1 oder der EP 20192858.7 bekannt sind, insbesondere auch bei Flussleitern mit einer zusätzlichen Sammelfläche, insbesondere mit jeweils zwei Sammelflächen, wie aus der EP 20192858.7 bekannt, eine einfache und präzise Montage der Drehmomentsensorvorrichtung, und dies insbesondere außerdem bei einem geringen Beschädigungsrisiko der Flussleiteranordnung.

Durch die Vormontage der beiden Flussleiter bzw. der Flussleiteranordnung mit dem zweiten Gehäuseteil kann ferner die Gefahr von Beschädigungen der Flussleiter bzw. der Flussleiteranordnung, beispielsweise durch Verbiegen der Flussleiter bei der Montage, reduziert werden. Umso mehr, je mehr die Flussleiter bzw. die Flussleiteranordnung von dem zweiten Gehäuseteil nach der Vormontage in Schritt b) eingehaust sind bzw. je mehr die Flussleiter bzw. die Flussleiteranordnung nach der Vormontage von dem zweiten Gehäuseteil umgeben sind.

Beim Vormontieren der ersten Baugruppe in Schritt a) werden vorzugsweise die Statoranordnung und/oder der wenigstens eine Magnetsensor zumindest teilweise in den ersten Gehäuseteil eingebracht, insbesondere eingesetzt, und direkt (d.h. ohne eine weiteres Bauteil dazwischen) oder indirekt (mit wenigstens einem Bauteil dazwischen) mit dem ersten Gehäuseteil verbunden und/oder an diesem befestigt.

Beim Vormontieren der zweiten Baugruppe in Schritt b) werden bevorzugt wenigstens der erste Flussleiter und der zweite Flussleiter, insbesondere die gesamte Flussleiteranordnung, zumindest teilweise in den zweiten Gehäuseteil eingebracht, und direkt oder indirekt mit dem zweiten Gehäuseteil verbunden und/oder an diesem befestigt, insbesondere derart, dass sie zumindest teilweise von dem zweiten Gehäuseteil aufgenommen sind.

In einer besonders bevorzugten Ausführung eines erfindungsgemäßen Verfahrens wird, vorzugsweise in einem weiteren Schritt, insbesondere bei der finalen Montage bzw. dem finalen Zusammenbau der Drehmomentsensorvorrichtung auf einer Welle, deren Drehmoment erfasst werden soll, die Magnetanordnung mit dem Magnetelement oder eine die Magnetanordnung umfassende Baugruppe, mit den übrigen Komponenten zusammengesetzt. Besonders bevorzugt wird in einem weiteren Schritt wenigstens die Magnetanordnung mit dem Magnetelement mit einer Baugruppe zusammengesetzt, welche wenigstens aus der ersten vormontierten Baugruppe und der zweiten vormontierten Baugruppe zusammengesetzt worden ist, insbesondere gemäß eines erfindungsgemäßen Verfahrens.

Bevorzugt wird die Magnetanordnung, insbesondere das wenigstens eine Magnetelement dabei derart angeordnet und derart relativ zur Statoranordnung positioniert, dass die Magnetanordnung und die Statoranordnung durch Aufbringen eines Drehmoments derart in Umfangsrichtung um eine Zentrumsachse der Drehmomentsensorvorrichtung relativ zueinander bewegbar sind, dass durch eine Relativbewegung zwischen der Magnetanordnung und der Statoranordnung in Umfangsrichtung ein magnetischer Fluss in der Statoranordnung erzeugbar ist, welcher insbesondere mittels wenigstens eines in den Spalt zwischen den Übertragungsflächen des ersten Flussleiters und des zweiten Flussleiters eingeführten Magnetsensors erfasst werden kann.

Bevorzugt wird die Magnetanordnung insbesondere konzentrisch zur Statoranordnung positioniert und insbesondere konzentrisch zur Zentrumsachse in die Statoranordnung eingeführt. Bevorzugt wird die Magnetanordnung dabei mit dem Magnetelement insbesondere innerhalb der Statoren, vorzugsweise radial innerhalb von den Statorlaschen, angeordnet.

Umfasst die Flussleiteranordnung der wenigstens teilweise oder vollständig zusammenzubauenden Drehmomentsensorvorrichtung weitere Komponenten, beispielsweise zusätzliche Sammelflächen, die bevorzugt insbesondere mit dem ersten Flussleiter und/oder dem zweiten Flussleiter magnetisch leitend zu koppeln sind, werden diese besonders bevorzugt ebenfalls in Schritt b) zusammen mit dem ersten Flussleiter und dem zweiten Flussleiter und dem ersten Gehäuseteil vormontiert, wobei diese Komponenten ebenfalls mit dem zweiten Gehäuseteil verbunden werden können, insbesondere an diesem befestigt werden können, und/oder am ersten Flussleiter und/oder am zweiten Flussleiter. Werden die zusätzlichen Komponenten nur am ersten Flussleiter und/oder nur am zweiten Flussleiter befestigt, können sie sowohl vor dem Verbinden der Flussleiter mit dem zweiten Gehäuseteil befestigt werden als auch danach. In vielen Fällen ist es jedoch vorteilhafter, wenn zunächst die gesamte Flussleiteranordnung vormontiert wird und dann als vormontierte Baugruppe mit dem zweiten Gehäuseteil in Schritt b) zu der zweiten Baugruppe zusammengesetzt wird.

Die Schritte a) und b), d.h. das Vormontieren der ersten Baugruppe und der zweiten Baugruppe, müssen dabei nicht nacheinander erfolgen. Sie können auch wenigstens teilweise oder vollständig parallel durchgeführt werden. Ebenfalls kann Schritt b) vor Schritt a) durchgeführt werden. Es ist lediglich wichtig, dass die Schritte a) und b) vor Schritt c) abgeschlossen sind.

Der axiale Spalt, der nach der Vormontage der zweiten Baugruppe zwischen der wenigstens einen Übertragungsfläche des ersten Flussleiters und der wenigstens einen Übertragungsfläche des zweiten Flussleiters besteht, ist insbesondere ein Luftspalt, welcher bevorzugt derart dimensioniert ist, dass die jeweils im Spalt anzuordnenden Komponenten im Spalt platziert werden können und der in der Flussleiteranordnung gebündelte magnetische Fluss mit einer ausreichenden Qualität an den nach dem Zusammenbau der Drehmomentsensorvorrichtung im Spalt angeordneten Magnetsensor übertragbar ist.

Unter einem "Zusammensetzen" im Sinne dieser Anmeldung, insbesondere im Sinne von Schritt c), wird im Rahmen dieser Anmeldung lediglich ein mechanisches Zusammensetzen, insbesondere ein mechanisches Anordnen, der jeweiligen Komponenten zueinander verstanden. Es können weitere Schritte erforderlich sein, wie beispielsweise das Herstellen elektronischer oder elektrischer Verbindungen oder dergleichen, um die Drehmomentsensorvorrichtung in einen Funktionszustand zu versetzen. Insbesondere kann beispielweise zusätzlich das Herstellen von einer oder mehreren Steckverbindungen oder einer oder mehreren elektrischen Kontaktverbindungen erforderlich sein.

Das Fixieren der ersten vormontierten Baugruppe und das Fixieren der zweiten vormontierten Baugruppe relativ zueinander in Schritt d) erfolgt bevorzugt insbesondere durch Herstellen einer Rastverbindung, insbesondere durch Rastverbinden des ersten Gehäuseteils mit dem zweiten Gehäuseteil, wobei dazu vorzugsweise wenigstens einer der Gehäuseteile wenigstens einen Rastvorsprung aufweist und der andere Gehäuseteil wenigstens einen Rastarm mit einem Rasthaken, wobei der Rasthaken den Rastvorsprung hintergreifen kann. Die beiden Gehäuseteile können aber auch durch Verschrauben oder Verkleben oder auf andere Art und Weise miteinander verbunden und dadurch relativ zueinander fixiert werden, wobei insbesondere die zweite Baugruppe in ihrer Zielposition fixiert wird.

In einer möglichen, insbesondere vorteilhaften Ausgestaltung eines erfindungsgemäßen Verfahrens erfolgt das Vormontieren der zweiten Baugruppe in Schritt b), indem zunächst der zweite Gehäuseteil und wenigstens der erste Flussleiter und der zweite Flussleiter, insbesondere die gesamte Flussleiteranordnung, bereitgestellt werden, und dann der erste Flussleiter und der zweite Flussleiter, insbesondere die gesamte Flussleiteranordnung, in den zweiten Gehäuseteil eingesetzt werden und mit diesem verbunden werden, insbesondere an diesem befestigt werden, beispielsweise durch Verrasten, Einclipsen, und/oder Verstemmen und/oder zumindest teilweises Umspritzen der Flussleiter bzw. der Flussleiteranordnung.

Hierdurch lässt sich eine besonders einfache Vormontage der zweiten Baugruppe erreichen, insbesondere eine einfache und gute Positionierung der Flussleiter relativ zueinander sowie von den Flussleitern bzw. der Flussleiteranordnung relativ zum zweiten Gehäuseteil. Besonders bevorzugt ist der zweite Gehäuseteil entsprechend ausgestaltet und zur Aufnahme der Flussleiter bzw. der Flussleiteranordnung ausgebildet und weist insbesondere spezielle Positionierhilfen und/oder Ausrichthilfen, wie beispielsweise entsprechende Anschlagflächen, Ausnehmungen oder dergleichen auf, welche dazu ausgebildet sind mit den Flussleitern bzw. der Flussleiteranordnung zusammenzuwirken, welche besonders bevorzugt ebenfalls entsprechende Anschlagflächen, Vorsprünge oder dergleichen als Positionierhilfen aufweisen.

Zum Verbinden mit dem zweiten Gehäuseteil weisen der zweite Gehäuseteil und/oder der erste Flussleiter und/oder der zweite Flussleiter bzw. die Flussleiteranordnung vorzugsweise ferner entsprechende Befestigungsmittel auf, insbesondere beispielsweise Rastelemente wie einen oder mehrere Rastvorsprünge, Rastnasen, Rasthaken, Rastarme, Clipse, oder dergleichen. Ist eine Befestigung durch zumindest teilweises Umspritzen der Flussleiter bzw. der Flussleiteranordnung vorgesehen, ist es vorteilhaft, wenn diese hierfür insbesondere spezielle Umspritz-Laschen oder dergleichen aufweisen, insbesondere 2-fach abgewinkelte Umspritz-Laschen. Durch derartige Laschen kann eine besonders gute und feste Verbindung mit dem zweiten Gehäuseteil erreicht werden.

Alternativ kann das Vormontieren der zweiten Baugruppe in Schritt b) auch erfolgen, indem beispielsweise zunächst wenigstens der erste Flussleiter und der zweite Flussleiter, insbesondere die gesamte Flussleiteranordnung, bereitgestellt werden, insbesondere in einem Formwerkzeug zur Herstellung des zweiten Gehäuseteils, und danach, insbesondere in einem sich unmittelbar daran anschließenden Schritt, das zweite Gehäuseteil im Spritzgussverfahren hergestellt wird, wobei wenigstens der erste Flussleiter und der zweite Flussleiter, insbesondere die gesamte Flussleiteranordnung, zumindest teilweise derart umspritzt werden, dass sie fest mit dem zweiten Gehäuseteil verbunden werden.

In einer weiteren möglichen, insbesondere vorteilhaften Ausgestaltung eines erfindungsgemäßen Verfahrens erfolgt das Zusammensetzen in Schritt c) insbesondere, indem in einem ersten Schritt c1) die erste vormontierte Baugruppe und die zweite vormontierte Baugruppe in einer Eingriffsposition miteinander in Kontakt gebracht werden, wobei die beiden Baugruppen insbesondere in Eingriff miteinander gebracht werden, und in einem weiteren, insbesondere nachfolgenden, Schritt c2) die zweite vormontierte Baugruppe in einer sich senkrecht zur Zentrumsachse der Drehmomentsensorvorrichtung erstreckenden Ebene in tangentialer Richtung relativ zur ersten Baugruppe bis in eine Zielposition verschoben wird. Hierdurch lässt sich eine besonders einfache Anordnung der zweiten vormontierten Baugruppe zu der ersten vormontierten Baugruppe erreichen, insbesondere wenn sich die Übertragungsflächen der beiden Flussleiter jeweils parallel zu einer senkrecht auf der Zentrumsachse stehenden Ebene erstrecken, in welcher die Verschiebrichtung verläuft. Hierdurch lässt sich auch mit Flussleitern, die sich zu den Übertragungsflächen parallele Sammelflächen aufweisen, auch mit Flussleitern mit ersten und zweiten Sammelflächen, mit welchen eine Kompensation eines Stör-Flussanteils erreicht werden kann, wie beispielsweise grundsätzlich von der Funktion her in der WO 2020/174170 A1, der WO 2020/174171 A1 oder der EP 20192858.7 beschrieben, eine besonders einfache Montage der Drehmomentsensorvorrichtung erreichen, insbesondere wenn sich alle Sammelflächen parallel zu den Übertragungsflächen erstrecken und sämtliche Verbindungsabschnitte zwischen den Übertragungsflächen und den Sammelflächen die Verschieberichtung nicht schneiden, sondern sich stets nur parallel zur Verschieberichtung erstrecken. Insbesondere lässt sich hierdurch ein besonders einfaches Einführen des wenigstens einen Magnetsensors in den axialen Spalt zwischen den Übertragungsflächen erreichen, insbesondere in tangentialer Richtung.

Es hat sich als besonders vorteilhaft herausgestellt, wenn beim Zusammensetzen in Schritt c) die zweite vormontierte Baugruppe, insbesondere der zweite Gehäuseteil, auf die ersten vormontierte Baugruppe, insbesondere den ersten Gehäuseteil, aufgeschoben wird, insbesondere in tangentialer Richtung. Dies ermöglicht eine besonders einfache Ausgestaltung der beiden Gehäuseteile und eine besonders kompakte und damit platzsparende Ausgestaltung der Drehmomentsensorvorrichtung.

Für eine besonders einfache Montage, insbesondere wenn eine Stör-Fluss-Einfluss-Reduzierung oder eine Stör-Fluss-Kompensation erwünscht ist, sind der erste Flussleiter und der zweite Flussleiter daher bevorzugt derart ausgebildet und dazu konfiguriert derart angeordnet zu werden, dass sich alle Sammelflächen parallel zu den Übertragungsflächen erstrecken und sämtliche Verbindungsabschnitte zwischen den Übertragungsflächen und den Sammelflächen die Verschieberichtung nicht schneiden, sondern sich stets nur parallel zur Verschieberichtung erstrecken.

In einer weiteren möglichen, insbesondere vorteilhaften Ausgestaltung eines erfindungsgemäßen Verfahrens ist der zweite Gehäuseteil zumindest an einer Unterseite und an einer Seite zumindest teilweise geöffnet, wobei bei der Vormontage in Schritt b) wenigstens der erste Flussleiter und/oder der zweite Flussleiter, insbesondere die gesamte Flussleiteranordnung, von der geöffneten Unterseite her oder von der geöffneten Seite her in den zweiten Gehäuseteil eingebracht werden, insbesondere eingesetzt werden. Dies ermöglicht eine besonders einfache Ausgestaltung des zweiten Gehäuseteils und eine besonders einfache Vormontage der zweiten Baugruppe.

In einer Weiterbildung eines erfindungsgemäßen Verfahrens wird die zweite vormontierte Baugruppe dabei in Schritt c1) derart ausgerichtet, dass sich in der Eingriffsposition der zweiten vormontierten Baugruppe die geöffnete Seite des zweiten Gehäuseteils wenigstens im Wesentlichen orthogonal zur Verschieberichtung erstreckt, und beim Verschieben in Schritt c2) in tangentialer Richtung die zweite vormontierte Baugruppe insbesondere mit der geöffneten Seite voran von der Eingriffsposition in die Zielposition verschoben wird. Dies ermöglicht eine besonders einfache Ausgestaltung der beiden Gehäuseteile und eine besonders einfaches Zusammensetzen der beiden Baugruppen in Schritt c), wobei die zweite vormontierte Baugruppe dazu in Schritt c1) besonders bevorzugt derart relativ zur ersten vormontierten Baugruppe angeordnet und ausgerichtet wird, dass die geöffnete Unterseite des zweiten Gehäuseteils der ersten vormontierten Baugruppe zugewandt ist, so dass diese parallel zur Zentrumsachse verschoben werden kann und sich die geöffnete Seite wenigstens im Wesentlichen orthogonal zur Verschieberichtung erstreckt, d.h. in einer Ebene senkrecht zur Verschieberichtung.

Alternativ kann in einer weiteren möglichen, ebenfalls vorteilhaften Ausgestaltung eines erfindungsgemäßen Verfahrens das Zusammensetzen in Schritt c) auch erfolgen, indem in einem ersten Schritt c1) die erste vormontierte Baugruppe und die zweite vormontierte Baugruppe in einer Eingriffsposition miteinander in Kontakt gebracht werden, insbesondere in Eingriff miteinander, und in einem weiteren, insbesondere nachfolgenden, Schritt c2) die zweite vormontierte Baugruppe in einer sich senkrecht zur Zentrumsachse der Drehmomentsensorvorrichtung erstreckenden Ebene in radialer Richtung relativ zur ersten Baugruppe bis in eine Zielposition verschoben wird.

Hierdurch lässt sich ebenfalls eine besonders einfache Anordnung der zweiten vormontierten Baugruppe zu der ersten vormontierten Baugruppe erreichen, insbesondere wenn sich die Übertragungsflächen der beiden Flussleiter jeweils parallel zu einer senkrecht auf der Zentrumsachse stehenden Ebene erstrecken, in welcher die Verschiebrichtung verläuft. Ebenso lässt sich hierdurch mit Flussleitern, die sich zu den Übertragungsflächen parallele Sammelfläche aufweisen, eine besonders einfache Montage der Drehmomentsensorvorrichtung erreichen, insbesondere wenn sich alle Sammelflächen parallel zu den Übertragungsflächen erstrecken und sämtliche Verbindungsabschnitte zwischen den Übertragungsflächen und den Sammelflächen die Verschieberichtung nicht schneiden. Insbesondere lässt sich hierdurch ein besonders einfaches Einführen des wenigstens einen Magnetsensors in den axialen Spalt zwischen den Übertragungsflächen erreichen, insbesondere in radialer Richtung.

Es hat sich alternativ als besonders vorteilhaft herausgestellt, wenn beim Zusammensetzen in Schritt c) die zweite vormontierte Baugruppe, insbesondere der zweite Gehäuseteil, zumindest teilweise in die ersten vormontierte Baugruppe, insbesondere den ersten Gehäuseteil, eingeschoben wird, insbesondere in radialer Richtung. Dies ermöglicht eine besonders einfache Ausgestaltung der beiden Gehäuseteile und eine besonders kompakte und damit platzsparende Ausgestaltung der Drehmomentsensorvorrichtung.

In einer weiteren möglichen, insbesondere vorteilhaften Ausgestaltung eines erfindungsgemäßen Verfahrens ist der zweite Gehäuseteil zumindest an einer Unterseite teilweise geöffnet, wobei bei der Vormontage in Schritt b) wenigstens der erste Flussleiter und/oder der zweite Flussleiter, insbesondere die gesamte Flussleiteranordnung, von der geöffneten Unterseite her in den zweiten Gehäuseteil eingebracht werden, insbesondere eingesetzt werden. Dies ermöglicht eine besonders einfache Ausgestaltung des zweiten Gehäuseteils und eine besonders einfache Vormontage der zweiten Baugruppe.

In einer alternativen Weiterbildung eines erfindungsgemäßen Verfahrens wird in Schritt c1) die zweite vormontierte Baugruppe insbesondere derart ausgerichtet, dass sich in der Eingriffsposition der zweiten vormontierten Baugruppe die geöffnete Unterseite wenigstens im Wesentlichen orthogonal zur Verschieberichtung erstreckt, und in Schritt c2) beim Verschieben in radialer Richtung die zweite vormontierte Baugruppe insbesondere mit der geöffneten Unterseite voran von der Eingriffsposition in die Zielposition verschoben wird. Dies ermöglicht ebenfalls eine besonders einfache Ausgestaltung der beiden Gehäuseteile und eine besonders einfaches Zusammensetzen der beiden Baugruppen in Schritt c), wobei die zweite vormontierte Baugruppe dazu in Schritt c1) besonders bevorzugt insbesondere derart relativ zur ersten vormontierten Baugruppe angeordnet und ausgerichtet wird, dass die geöffnete Unterseite des zweiten Gehäuseteils der ersten vormontierten Baugruppe zugewandt ist, so dass diese in einer Ebene senkrecht zur Zentrumsachse verschoben werden kann und sich die geöffnete Seite wenigstens im Wesentlichen orthogonal zur Verschieberichtung erstreckt, d.h. in einer Ebene senkrecht zur Verschieberichtung.

Bevorzugt wird die zweite Baugruppe während des Verschiebens dabei jeweils mittels Führungselementen an der ersten Baugruppe, insbesondere mittels Führungselementen des ersten Gehäuseteils, welche mit entsprechenden Führungselementen an der zweiten Baugruppe, insbesondere am zweiten Gehäuseteil, zusammenwirken, geführt, insbesondere mechanisch. Hierdurch lässt sich auf besonders einfache Art und Weise das Risiko einer Beschädigung der Flussleiter bzw. der Flussleiteranordnung reduzieren und auf einfache Art und Weise ferner auch prozesssicher eine präzise Positionierung der beiden Baugruppen zueinander und damit zumindest von den Flussleitern relativ zu wenigstens einem Magnetsensor der Magnetsensoranordnung erreichen.

In einer weiteren möglichen, insbesondere vorteilhaften Ausgestaltung eines erfindungsgemäßen Verfahrens weist die Magnetsensoranordnung ferner eine Leiterplatte auf, wobei wenigstens ein Magnetsensor an der Leiterplatte befestigt ist, wobei die Leiterplatte eine Aussparung, insbesondere eine geschlitzte Ausnehmung oder eine Durchgangsöffnung oder dergleichen, oder einen Bereich mit reduzierter Dicke gegenüber einem umgebenden Bereich aufweist, wobei der wenigstens eine an der Leiterplatte befestigte Magnetsensor im Bereich der Aussparung oder im Bereich mit der reduzierten Dicke angeordnet ist, und wobei das Zusammensetzen der ersten vormontierten Baugruppe und der zweiten vormontierten Baugruppe in Schritt c) derart erfolgt, dass sich nach dem Einführen des wenigstens einen Magnetsensors der Magnetsensoranordnung in den Spalt zwischen den Übertragungsflächen des ersten Flussleiters und des zweiten Flussleiters die Aussparung oder der Bereich mit der reduzierten Dicke der Leiterplatte ebenfalls im Spalt zwischen den Übertragungsflächen der beiden Flussleiter befindet. Mittels einer derartigen Leiterplatte kann auf einfache Art und Weise ein Abstand zwischen beiden, sich gegenüberliegenden Übertragungsflächen bzw. eine Spaltbreite in axialer Richtung reduziert, insbesondere minimiert, werden, was sich insbesondere vorteilhaft auf die Bauhöhe der Drehmomentsensorvorrichtung in axialer Richtung im Bereich des Magnetsensors auswirkt.

Sämtliche der im Zusammenhang mit einer erfindungsgemäßen Drehmomentsensorvorrichtung beschriebenen Merkmale und Ausführungsformen sowie jeweils deren Vorteile gelten jeweils entsprechend auch für ein erfindungsgemäßes Verfahren und umgekehrt, sofern dies technisch möglich bzw. ausführbar ist, auch wenn diese jeweils nur einmal im Zusammenhang mit nur einem der vorgenannten Erfindungsgegenstände explizit oder implizit beschrieben sind.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in den Figuren jeweils erkennbar dargestellten und/oder in der Figurenbeschreibung genannten Merkmale und Merkmalskombinationen können nicht nur in der jeweils angegebenen Kombination verwirklicht sein, sondern können auch in anderen (Merkmals-)Kombinationen oder aber auch in Alleinstellung, d.h. isoliert von den anderen Merkmalen der hierin beschriebenen Kombination, in einer erfindungsgemäßen Drehmomentsensorvorrichtung und/oder bei einem erfindungsgemäßen Verfahren verwirklicht sein, sofern diese Kombination bzw. die entsprechende Alleinstellung technisch möglich und ausführbar ist.

Die Erfindung wird nun anhand mehrerer bevorzugter, nicht einschränkend zu verstehender Ausführungsbeispiele unter Bezugnahme auf die beigefügten Zeichnungen näher erläutert, wobei funktionsgleiche Bauteile mit gleichen Bezugszeichen versehen sind. Es zeigen jeweils schematisch:
- **Fig. 1**: Teile eines ersten Ausführungsbeispiels einer erfindungsgemäßen Drehmomentsensorvorrichtung in verschiedenen Montagezuständen in teilweiser Explosionsdarstellung,
- **Fig. 2**: Teile eines zweiten Ausführungsbeispiels einer erfindungsgemäßen Drehmomentsensorvorrichtung in verschiedenen Montagezuständen in teilweiser Explosionsdarstellung,
- **Fig. 3**: die Leiterplatte der Drehmomentsensorvorrichtung aus Fig. 1 und 2 mit den beiden daran befestigten Magnetsensoren in perspektivischer Darstellung mit Blick auf eine erste Seite der Leiterplatte,
- **Fig. 4**: die Leiterplatte aus Fig. 3 mit Blick auf die andere Seite der Leiterplatte und die beiden Flussleiter der Drehmomentsensoranordnung aus Fig. 2, welche die Flussleiteranordnung der Drehmomentsensorvorrichtung aus Fig. 2 bilden,
- **Fig. 5**: einen Ausschnitt der Drehmomentsensoranordnung aus Fig. 2 in perspektivischer, vergrößerter Darstellung in einer anderen Ansicht, ohne die beiden Gehäuseteile jedoch mit Magnetelement,
- **Fig. 6**: Teile eines dritten Ausführungsbeispiels einer erfindungsgemäßen Drehmomentsensorvorrichtung in verschiedenen Montagezuständen in teilweiser Explosionsdarstellung,
- **Fig. 7**: Teile eines vierten Ausführungsbeispiels einer erfindungsgemäßen Drehmomentsensorvorrichtung in verschiedenen Montagezuständen in teilweiser Explosionsdarstellung,
- **Fig. 8**: die Leiterplatte der Drehmomentsensorvorrichtung aus Fig. 6 und 7 mit den beiden daran befestigten Magnetsensoren in perspektivischer Darstellung mit Blick auf eine erste Seite der Leiterplatte, und
- **Fig. 9**: die Leiterplatte aus Fig. 8 mit Blick auf die andere Seite der Leiterplatte und die beiden Flussleiter der Drehmomentsensoranordnung aus Fig. 7, welche die Flussleiteranordnung der Drehmomentsensorvorrichtung aus Fig. 7 bilden.

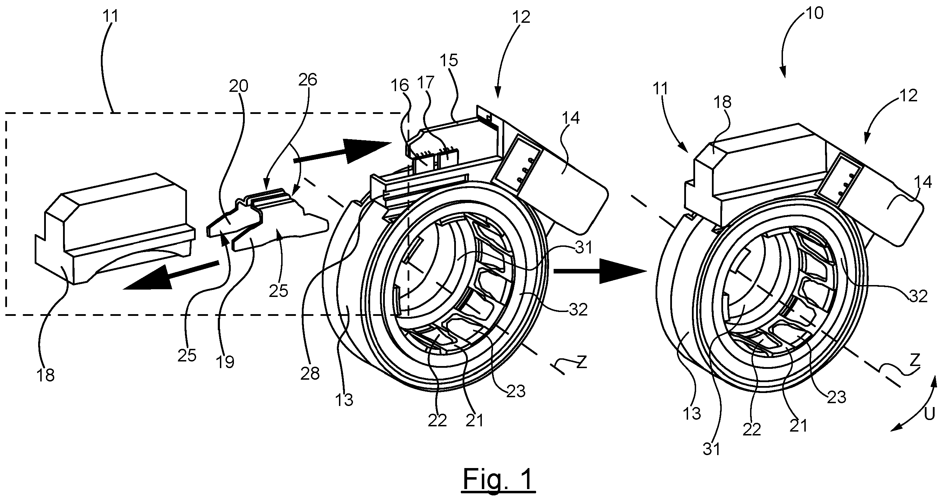

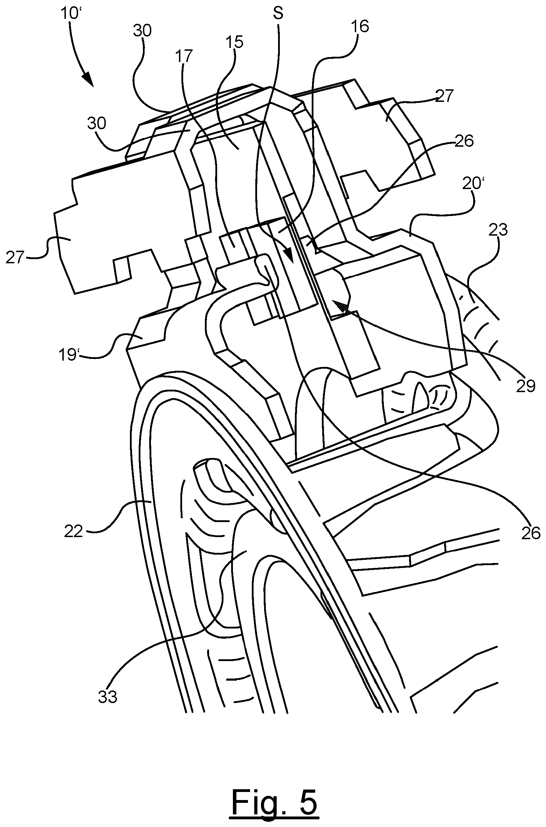

**Fig. 1** zeigt Teile eines ersten Ausführungsbeispiels einer erfindungsgemäßen Drehmomentsensorvorrichtung 10 in verschiedenen Montagezuständen in teilweiser Explosionsdarstellung, allerdings ohne eine zugehörige Magnetanordnung, d.h. ohne ein zugehöriges Magnetelement 33 (vgl. Fig. 5), wobei die Drehmomentsensorvorrichtung 10 zum Erfassen eines auf eine Lenkwelle eines Kraftfahrzeugs aufgebrachten Drehmoments ausgebildet ist und eine Statoranordnung mit einem Statorhalter 21 sowie einem ersten Stator 22 und einem zweiten Stator 23 mit jeweils einem hier nicht näher bezeichneten, ringstreifenförmigen Statorkörper und ebenfalls nicht näher bezeichneten Statorlaschen aufweist.

Die Statorlaschen der beiden Statoren 22 und 23, die mittels des Statorhalters 21 gehalten werden, auf welchen sie insbesondere in axialer Richtung aufgeschoben sind, greifen dabei ähnlich einer Verzahnung ineinander. Mittels eines Befestigungsrings 32 werden die Statoren 22 und 23 zumindest in einer Richtung axial fixiert. Daher kann der Befestigungsring 32 auch als Fixierring 32 bezeichnet werden. Zur drehfesten Verbindung der Statoranordnung mit einem ersten Teil einer hier nicht dargestellten Welle weist der Statorhalter 21 ferner eine Befestigungshülse 31 bzw. einen hülsenförmigen Befestigungsabschnitt auf, welcher auf dem zugehörigen Wellenabschnitt aufgeschoben und auf diesem befestigt werden kann, beispielsweise durch Aufschrumpfen mittels einer Presspassung.

Zur Erzeugung eines magnetischen Flusses kann konzentrisch zur Statoranordnung bzw. zur Zentrumsachse Z bei dieser Drehmomentsensorvorrichtung 10, wie aus dem Stand der Technik grundsätzlich bekannt, eine Magnetanordnung mit einem Magnetelement 33, wie es beispielhalber in Fig. 5 gezeigt ist, im Inneren der Statoranordnung angeordnet werden, wobei zugunsten einer besseren Erkennbarkeit der Statoranordnung die Magnetanordnung außer in Fig. 5 nicht gezeigt ist.

Die Magnetanordnung 33 kann insbesondere, wie bei dem Beispiel in Fig. 5, zum Erzeugen wenigstens eines Nutz-Magnetfeldes ein Magnetelement 33 in Form eines ringförmigen Permanentmagneten aufweisen, welcher konzentrisch zu einer Zentrumsachse Z und zur Statoranordnung angeordnet ist bzw. werden kann und drehfest auf einem ersten Teil einer hier nicht dargestellten Lenkwelle befestigt werden kann, während die Statoranordnung, wie eingangs bereits erwähnt, über die Befestigungshülse 32 drehfest mit einem zweiten Teil der Lenkwelle verbunden werden kann, sodass die Statoranordnung in Umfangsrichtung U relativ gegenüber dem Magnetelement 33 um die Zentrumsachse Z, welche in einem funktionsgemäßen Verwendungszustand der Drehmomentsensorvorrichtung 10 insbesondere mit einer Rotationsachse der Lenkwelle zusammenfällt, verdrehbar ist, wodurch ein magnetischer Fluss in der Statoranordnung, insbesondere in den beiden Statoren 22 und 23, erzeugt werden kann. In Abhängigkeit von dem auf diese Weise erzeugten magnetischen Fluss kann das auf die Lenkwelle aufgebrachte Drehmoment mithilfe der Magnetsensoranordnung und einer hier nicht näher dargestellten Steuereinrichtung bestimmt werden.

Ferner weist die Drehmomentsensorvorrichtung 10 erfindungsgemäß eine Flussleiteranordnung mit einem ersten Flussleiter 19 und einem zweiten Flussleiter 20 sowie einer Magnetsensoranordnung mit einer Leiterplatte 15 und zwei Magnetsensoren 16 und 17 auf. Die Flussleiteranordnung mit den beiden Flussleitern 19 und 20 ist dabei zur zumindest teilweisen Bündelung und zur Weiterleitung des in der Statoranordnung erzeugten magnetischen Flusses an die beiden Magnetsensoren 16 und 17 ausgebildet, wobei die Magnetsensoren 16 und 17 jeweils wiederum zur Erzeugung eines entsprechenden Sensorsignals zur weiteren Auswertung ausgebildet sind, aus welchen das Drehmoment bestimmt werden kann.

Jeder der Flussleiter 19 und 20 weist bei diesem Ausführungsbeispiel einer erfindungsgemäßen Drehmomentübertragungsvorrichtung 10 jeweils eine Sammelfläche 25 auf und jeweils eine Übertragungsfläche 26, wobei über die Sammelflächen 25 jeweils die Bündelung des in der Statoranordnung erzeugten magnetischen Flusses erfolgt und über die Übertragungsflächen 26 jeweils die Übertragung an die Magnetsensoren 16 und 17, welche in einem zusammengebauten Zustand der Drehmomentsensorvorrichtung 10 jeweils parallel zu den Übertragungsflächen 26 im axialen Spalt S (vgl. Fig. 5) zwischen den Übertragungsflächen 26 angeordnet sind.

Ferner weist die erfindungsgemäße Drehmomentsensorvorrichtung 10 einen ersten Gehäuseteil 13 auf, von welchem die Statoranordnung und die Magnetsensoranordnung aufgenommen sind, und welcher eine Steckeraufnahme 14 zur Herstellung einer Daten- und Signalverbindung mit einer zugehörigen, hier nicht dargestellten Steuerungseinrichtung sowie zur Energieversorgung umfasst. Der erste Gehäuseteil 13 ist dabei erfindungsgemäß mit der Magnetsensoranordnung mit der Leiterplatte 15 und den beiden Magnetsensoren 16 und 17 sowie mit der Statoranordnung mit dem Statorhalter 21, den Statoren 22 und 23 und in diesem Fall dem Fixierring 32 zu einer ersten Baugruppe 12 vormontiert.

Der erste Gehäuseteil 13 ist bei dem in Fig. 1 gezeigten Beispiel zweiteilig ausgebildet und insbesondere aus zwei Hälften mit einer sich senkrecht zur Zentrumsachse Z erstreckenden Trennebene zusammengesetzt. Dies ermöglicht eine besonders einfache Vormontage der ersten Baugruppe 12, wobei die zwei Hälften des ersten Gehäuseteils 13 insbesondere in axialer Richtung zusammengesetzt werden können und miteinander verrastet werden können, wodurch die übrigen Komponenten der ersten vormontierten Baugruppe 12 (die Statoranordnung mit dem Statorhalter 21 mit dem ^{B}efestigungsabschnitt 31, den Statoren 22 und 23 mit den Statorlaschen, der Fixierring 32 und die Magnetsensoranordnung mit der Leiterplatte 15 und den Magnetsensoren 16 und 17) auf einfache Art und Weise in dem ersten Gehäuseteil 13 gehalten und relativ zueinander fixiert werden können.

Des Weiteren weist die Drehmomentsensorvorrichtung 10 einen zweiten Gehäuseteil 18 auf, welcher dazu ausgebildet ist, die Flussleiteranordnung mit den beiden Flussleitern 19 und 20 aufzunehmen, um mit diesen eine zweite vormontierte Baugruppe 11 zu bilden, was durch das gestrichelte Rechteck in Fig. 1 symbolisiert sein soll.

Der zweite Gehäuseteil 18 ist diesem Ausführungsbeispiels dabei einstückig ausgebildet, d.h. nicht aus mehreren Teilen zusammengesetzt, sondern ein einzelnes Bauteil, aber an seiner Unterseite und an einer Seite offen ausgebildet (hier an der rechten Seite), so dass die Flussleiter 19 und 20, insbesondere die gesamte Flussleiteranordnung, wie innerhalb des gestrichelten Rechtecks in Fig. 1 durch den Pfeil von der Seite her in Pfeilrichtung in den zweiten Gehäuseteil 18 eingeschoben werden können (bezogen auf die Darstellung in Fig. 1 von rechts nach links). Die Flussleiter 19 und 20 können insbesondere in den zweiten Gehäuseteil 18 eingesetzt und in diesem verrastet werden und auf diese Weise fest mit dem zweiten Gehäuseteil 18 verbunden werden und gegen ein Herausfallen gesichert werden.

Alternativ können ein oder mehrere Flussleiter auch beispielsweise durch Verstemmen, Vergießen und/oder Verkleben oder dergleichen im oder am zweiten Gehäuseteil 18 befestigt werden.

Die beiden Gehäuseteile 18 und 13 sind vorzugsweise aus Kunststoff ausgebildet, und besonders bevorzugt im Spritzgussverfahren hergestellt, wobei alternativ zu der hier beschriebenen Ausgestaltung bzw. in Fig. 1 gezeigten möglichen Ausgestaltung der zweite Gehäuseteil 18 auch (erst) bei einem zumindest teilweisen Umspritzen der Flussleiteranordnung hergestellt werden kann, während gleichzeitig durch das zumindest teilweise Umspritzen der Flussleiteranordnung die Flussleiteranordnung, insbesondere zumindest wenigstens der erste Flussleiter 19 und der zweite Flussleiter 20, teilweise umspritzt und dadurch mit dem zweiten Gehäuseteil 18 fest verbunden werden kann.

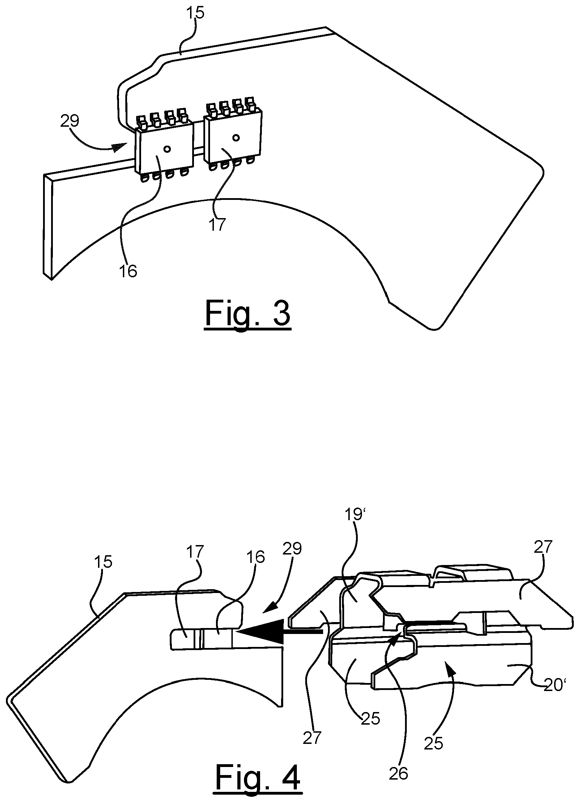

Der zweite Gehäuseteil 18 kann bei diesem Ausführungsbeispiel einer erfindungsgemäßen Drehmomentsensorvorrichtung 10 dabei in tangentialer Richtung auf den ersten Gehäuseteil 13 aufgeschoben werden, wobei beim Aufschieben die beiden Magnetsensoren 16 und 17 derart in der Spalt S (vgl. Fig. 4) zwischen den Übertragungsflächen 26 des ersten Flussleiters 19 und des zweiten Flussleiters 20 eingeführt werden, dass in einem zumindest teilweise funktionsgemäß zusammengesetzten Zustand der Drehmomentsensorvorrichtung 10, insbesondere in einem funktionsgemäß zusammengesetzten Zustand der ersten vormontierten Baugruppe 12 und der zweiten vormontierten Baugruppe 11, wie er ganz rechts in Fig. 1 gezeigt ist, grundsätzlich ein in der Statoranordnung erzeugter magnetischer Fluss mittels der Magnetsensoren 16 und 17 erfasst werden kann.

Die beiden Magnetsensoren 16 und 17 sind dabei jeweils auf einer sich senkrecht zur Zentrumsachse Z erstreckenden Leiterplatte 15 angeordnet, wobei die Leiterplatte 15 im Bereich der Magnetsensoren 16 und 17 jeweils eine U-förmig geschlitzte Aussparung 29 aufweist, in welcher jeweils eine der Übertragungsflächen 26 von einem der beiden Flussleiter 19 bzw. 20, bei diesem Beispiel die Übertragungsfläche 26 des Flussleiters 20, in einer Ebene mit der Leiterplattenebene angeordnet werden kann, wodurch eine besonders kompaktbauende Drehmomentsensorvorrichtung 10 in axialer Richtung in diesem Bereich erreicht werden kann.

Für eine beschädigungsfreie Montage und insbesondere für eine genaue Positionierung der Flussleiter 19 und 20 innerhalb der Drehmomentsensorvorrichtung 10, insbesondere relativ zu deren Komponenten, insbesondere relativ zur Statoranordnung mit den Statoren 22 und 23 und den Magnetsensoren 16 und 17, sind bei diesem Ausführungsbeispiel am ersten Gehäuseteil 13 jeweils außen in Verschieberichtung, in diesem Fall in tangentialer Richtung verlaufende, entsprechende U-förmige Führungsnuten 28 vorgesehen, in welche hier nicht erkennbar dargestellte und im Inneren des zweiten Gehäuseteils 18 angeordnete, korrespondierend ausgebildete Führungsschienen oder Führungsvorsprünge oder Führungspins eingreifen können, mittels welchen beim Inkontaktbringen bzw. Ineingriffbringen die gewünschte Ausrichtung der beiden vormontierten Baugruppen 11 und 12 zueinander erreicht werden kann sowie eine präzise Führung während des Aufschiebens der zweiten vormontierten Baugruppe 11 auf die erste Baugruppe 12. Hierdurch kann die Gefahr von Beschädigungen der Flussleiter 19 und 20, insbesondere von Verbiegungen, auf einfache Art und Weise erheblich reduziert werden. Die nicht erkennbar dargestellten Führungselemente im zweiten Gehäuseteil 18 erstrecken sich dabei vorzugsweise ebenfalls in tangentialer Richtung und insbesondere mit der gleichen Länge wie die Führungsnut. Sie können aber auch kürzer ausgebildet sein.

Ist die zweite vormontierte Baugruppe 11 bzw. der zweite Gehäuseteil 18 bis in eine Zielposition, wie sie ganz rechts in Fig. 1 gezeigt ist, in welcher die erste vormontierte Baugruppe 12 und die zweite vormontierte Baugruppe 11 funktionsgemäß zusammengesetzt sind, auf den ersten Gehäuseteil 13 bzw. die erste vormontierte Baugruppe 12 aufgeschoben, kann der zweite Gehäuseteil 18 bzw. die zweite vormontierte Baugruppe 11 relativ zur ersten vormontierten Baugruppe 12 bzw. insbesondere am ersten Gehäuseteil 13 in ihrer Position fixiert werden.

Die in Fig. 1 dargestellte Drehmomentsensorvorrichtung 10 kann durch ein erfindungsgemäßes Verfahren zumindest teilweise, mit weiteren, insbesondere nachfolgenden Schritten, insbesondere vollständig zusammengesetzt bzw. montiert werden, wobei wenigstens in einem ersten Schritt a) der erste Gehäuseteil 13 sowie die Statoranordnung mit dem Statorhalter 21 und den Statoren 22 und 23 und die Leiterplatte 15 mit den Magnetsensoren 16 und 17 zu einer ersten Baugruppe 12, wie in der Mitte von Fig. 1 gezeigt, vormontiert werden.

In einem weiteren Schritt b) welcher auch vor oder gleichzeitig mit Schritt a) durchgeführt werden kann, werden die beiden Flussleiter 19 und 20, welche in diesem Fall die Flussleiteranordnung der Drehmomentsensorvorrichtung 10 bilden, mit dem zweiten Gehäuseteil 18 zu einer zweiten Baugruppe vormontiert.

Anschließend werden in einem dritten Schritt c) die erste vormontierte Baugruppe 11 und die zweite vormontierte Baugruppe 12 zusammengesetzt, wobei dabei die beiden Magnetsensoren 16 und 17 jeweils in den Spalt zwischen den beiden Übertragungsflächen 26 der beiden Flussleiter 19 und 20 eingeführt werden, insbesondere derart, dass ein in der Statoranordnung erzeugter magnetischer Fluss mittels der beiden Magnetsensoren 16 und 17, welche jeweils als Hall-Sensoren ausgebildet sind, erfasst werden kann.

Anschließend wird die zweite vormontierte Baugruppe in einem weiteren Schritt d) mit dem zweiten Gehäuseteil 18 relativ zur ersten Baugruppe 12 in ihrer Position fixiert, insbesondere durch ein Verrasten des zweiten Gehäuseteils 18 am ersten Gehäuseteil 13.

Bei diesem Ausführungsbeispiel erfolgt das Zusammensetzen der beiden Baugruppen 11 und vormontierten Baugruppen 11 und 12 in Schritt c) dabei derart, dass zunächst die beiden Baugruppen 11 und 12 miteinander in Eingriff gebracht werden, was hier nicht dargestellt ist, bevor anschließend die zweite Baugruppe 11 durch eine tangentiale Verschiebung in einer sich senkrecht zur Zentrumsachse Z erstreckenden Ebene auf die erste Baugruppe 12, insbesondere dessen Gehäuseteil 13, aufgeschoben wird und in ihrer Zielposition wie rechts im Bild von Fig. 1 dargestellt, fixiert wird. Hierdurch kann eine besonders einfache Montage einer Drehmomentsensorvorrichtung erreicht werden.

Bevorzugt wird in einem weiteren Schritt, insbesondere beim Befestigen der Statoranordnung auf einer Welle, die Magnetanordnung mit dem Magnetelement 33 entsprechend relativ und funktionsgemäß im Inneren der Statoren 22 und 23 angeordnet, insbesondere konzentrisch zur Zentrumsachse Z, so dass die Magnetanordnung und die Statoranordnung durch Aufbringen eines Drehmoments derart in Umfangsrichtung U um die Zentrumsachse Z der Drehmomentsensorvorrichtung 10 relativ zueinander bewegbar sind, dass durch eine Relativbewegung zwischen der Magnetanordnung 33 (vgl. Fig. 5) und der Statoranordnung in Umfangsrichtung U ein magnetischer Fluss in der Statoranordnung erzeugbar ist.

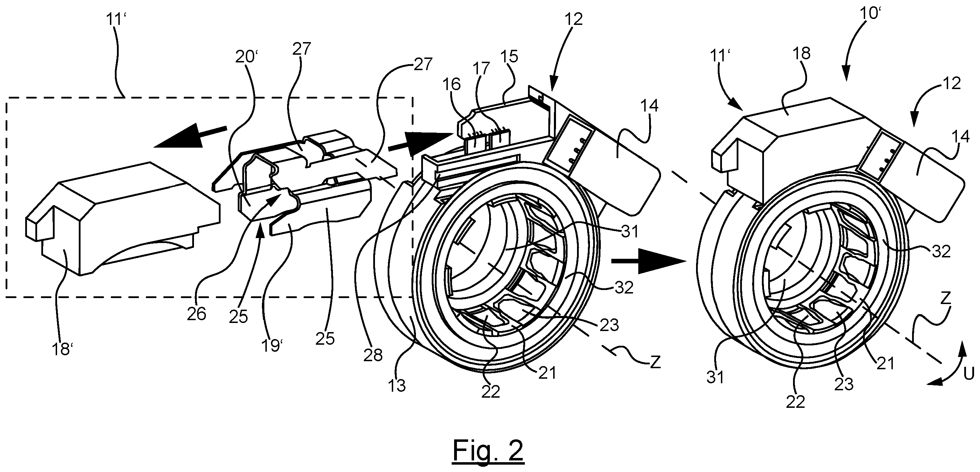

Fig. 2 zeigt Teile eines zweiten Ausführungsbeispiels einer erfindungsgemäßen Drehmomentsensorvorrichtung 10' in verschiedenen Montagezuständen in teilweiser Explosionsdarstellung, wobei bei diesem Ausführungsbeispiel 10' die Flussleiteranordnung anders ausgebildet ist. Bei diesem Beispiels weist jeder der beiden Flussleiter 19' und 20' jeweils zusätzlich zur ersten Sammelfläche 25 jeweils eine zweite Sammelfläche 27 auf, welche jeweils derart angeordnet ist und jeweils über einen Verbindungsabschnitt 30 (vgl. Fig. 5) derart magnetisch leitend mit der zugehörigen Übertragungsfläche 26 des jeweiligen Flussleiters 19' bzw. 20' verbunden ist, dass ein im jeweils anderen Flussleiter 20' bzw. 19' gebündelter magnetische Stör-Fluss sich im axialen Spalt zumindest teilweise aufhebt. Zur näheren Beschreibung dieses Effekts sei auf die EP 20192858.7 verwiesen. Dadurch kann auf besonders einfache Art und Weise eine Verringerung des Stör-Einflusses eines magnetischen Stör-Magnetfeldes in der Umgebung der Drehmomentsensorvorrichtung 10' reduziert oder bei entsprechender Ausgestaltung sogar vollständig vermieden werden.

Bis auf die andere Flussleiteranordnung ist die in Fig. 2 dargestellte, erfindungsgemäße Drehmomentsensorvorrichtung 10' im Wesentlichen analog zu der Drehmomentsensorvorrichtung 10 aus Fig. 1 ausgebildet und kann ebenfalls gemäß eines erfindungsgemäßen Verfahrens zusammengebaut werden, wobei dazu ebenfalls die beiden Flussleiter 19' und 20' zunächst von der Seite her in den zweiten Gehäuseteil 18' eingeführt und in diesem verrastet werden und dann mit diesem zusammen als zweite vormontierte Baugruppe 11 in tangentialer Richtung senkrecht zur Zentrumsachse Z auf den ersten Gehäuseteil 13 bzw. die erste vormontierte Baugruppe 12, welche identisch zu der vormontierten Baugruppe 12 aus Fig. 1 ist, aufgeschoben werden können, sodass die Magnetsensoren 16 und 17 in den Spalt zwischen den Übertragungsflächen 26 der beiden Flussleiter 19' und 20' eingeführt werden. Auch hier kann mittels der Führungsnuten 28 und entsprechenden, hier ebenfalls nicht erkennbar dargestellten Führungselementen im Inneren des zweiten Gehäuseteils 18' eine beschädigungsfreie und genaue Positionierung der Flussleiter 19' und 20' erreicht werden.

Fig. 3 zeigt zum besseren Verständnis die Leiterplatte 15 der Drehmomentsensorvorrichtung aus Fig. 1 und 2 mit den beiden daran befestigten Magnetsensoren 16, 17 in perspektivischer Darstellung mit Blick auf eine erste Seite der Leiterplatte 15, wobei anhand dieser Darstellung besonders gut der Schlitz 29 in der Leiterplatte 15 erkennbar ist und die Art und Weise der Befestigung der Magnetsensoren 16 und 17 auf der Leiterplatte 15. In diesem Fall sind, insbesondere um eine besonders geringe axiale Bauhöhe erreichen zu können, die beiden Magnetsensor 16 und 17 dabei als sogenannte SMD Bauteile ausgebildet, wobei die Leiterplatte eine Standard-PCB ist, d.h. eine Standard-Leiterplatte 15.

**Fig. 4** zeigt die Leiterplatte 15 aus Fig. 3 mit Blick auf die andere Seite der Leiterplatte 15 und die beiden Flussleiter 19' und 20' der Drehmomentsensoranordnung 10' aus Fig. 2, welche die Flussleiteranordnung der Drehmomentsensorvorrichtung 10' aus Fig. 2 bilden, wobei in dieser Ansicht die beiden Übertragungsflächen 26 gut zu erkennen sind.

**Fig. 5** zeigt die Drehmomentsensoranordnung 10' aus Fig. 2 in perspektivischer Darstellung, jedoch ohne die beiden Gehäuseteile 13 und 18 jedoch mit konzentrisch im Inneren der Statoren 22 und 23 angeordnetem Magnetelement 33 in Form eines Permanent-Ringmagneten 33, welcher drehfest auf einem zweiten Teil einer Welle befestigt werden kann und in Umfangsrichtung U relativ zu den Statoren bzw. der Statoranordnung bewegt, insbesondere verdreht werden kann. In dieser Darstellung ist ferner die Anordnung der einzelnen Komponenten im axialen Spalt S gut zu erkennen, insbesondere die Anordnung der Magnetsensoren 16 und 17 im Spalt zwischen den Übertragungsflächen 26 und die Anordnung der Übertragungsfläche 26 des Flussleiters 20' in der geschlitzten Aussparung 29 der Leiterplatte 15 in einer Ebene mit der Leiterplatte 15.

Ebenfalls ist gut die U-förmige Ausgestaltung der beiden Flussleiter 19' und 20' zu erkennen mit ihren jeweils zwei Sammelflächen 25 und 27, welche jeweils über einen Verbindungsabschnitt 30 miteinander magnetisch leitend verbunden sind, wobei die ersten Sammelflächen 25 ferner jeweils magnetisch leitend mit den Übertragungsflächen 26 magnetisch leitend verbunden sind, so dass ein im Flussleiter gebündelter Fluss an die Magnetsensoren 16 und 17 (berührungslos) übertragen werden kann. Durch die spezielle, verschränkte Anordnung der Übertragungsflächen 26 und der Sammelflächen 27 kann eine Stör-Fluss-Kompensation bzw. eine Reduzierung eines Stör-Fluss-Einflusses und damit eine verbesserte Genauigkeit der Sensorvorrichtung 10' erreicht werden. Für nähere Informationen hierzu, insbesondere wodurch dieser Effekt entsteht und wie die Flussleiter 19' und 20' vorzugsweise auszugestalten sind, wird auf die bereits mehrfach erwähnte EP 20192858.7 verwiesen.

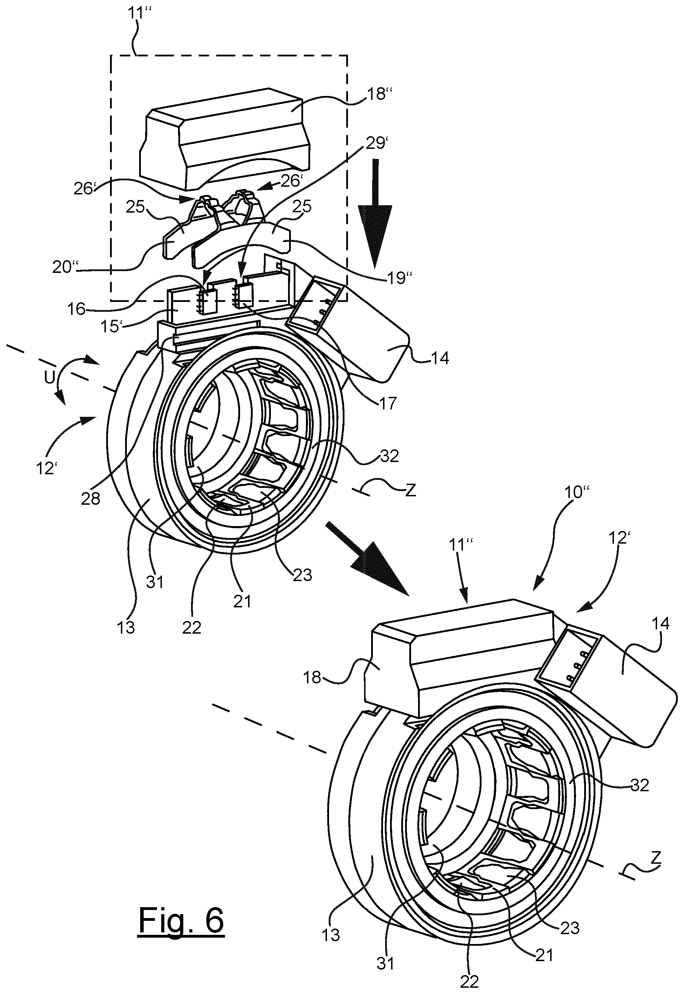

**Fig. 6** zeigt Teile eines dritten Ausführungsbeispiels einer erfindungsgemäßen Drehmomentsensorvorrichtung 10" in verschiedenen Montagezuständen in teilweiser Explosionsdarstellung, wobei dieses Ausführungsbeispiel einer erfindungsgemäßen Drehmomentsensorvorrichtung 10" sich darin von den beiden zuvor beschriebenen Drehmomentsensorvorrichtungen 10 und 10' unterscheidet, dass in diesem Fall der zweite Gehäuseteil 18" nur an einer Unterseite zumindest teilweise geöffnet ist und die Flussleiteranordnung mit den beiden Flussleitern 19" und 20" in diesem Fall von unten in den zweiten Gehäuseteil 18" eingesetzt bzw. eingesteckt wird bzw. der zweite Gehäuseteil 18" bzw. die zweite vormontierte Baugruppe 11" auf die erste vormontierte Baugruppe 12' aufgesteckt wird. Auch hier soll das gestrichelte Rechteck die zweite vormontierte Baugruppe 11" symbolisieren.

Wie bei dem Ausführungsbeispiel in Fig. 1 weist diese Flussleiteranordnung ebenfalls jeweils nur Flussleiter 19" und 20" mit jeweils einer ersten Sammelfläche 25 auf und nicht wie bei dem Beispiel in Fig. 2 mit jeweils zwei Sammelflächen 25 und 27.

Ein weiterer Unterschied bei dem in Fig. 6 gezeigten Ausführungsbeispiel einer erfindungsgemäßen Drehmomentsensorvorrichtung 10" zu der Vorrichtung aus Fig. 1 ist, dass die zweite vormontierte Baugruppe 11" nicht in tangentialer Richtung auf die erste vormontierte Baugruppe 12' aufgeschoben wird, sondern insbesondere in radialer Richtung aufgesteckt wird, was durch den zugehörigen Pfeil angedeutet ist.

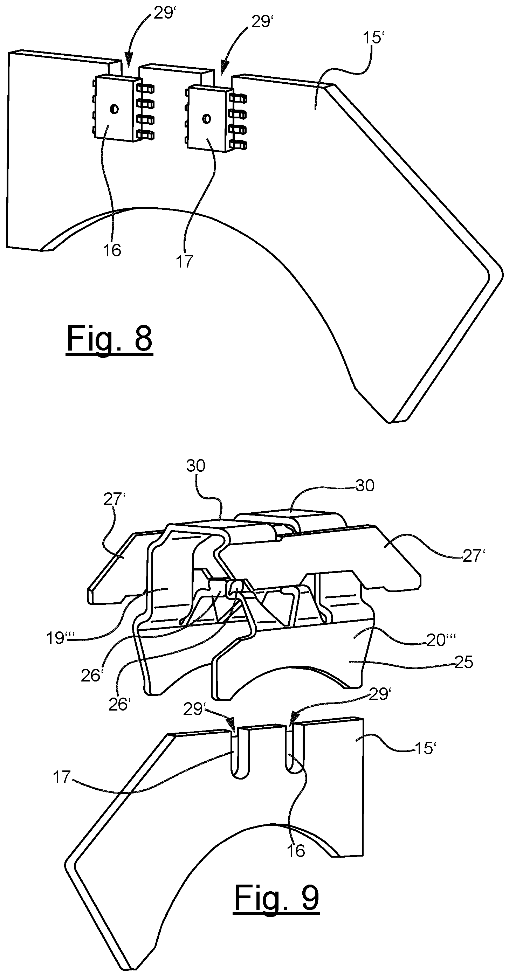

Damit die Übertragungsflächen 26 der Flussleiter 19" und 20" ebenfalls einen möglichst optimalen Spalt bilden können bzw. möglichst optimal in axialer Richtung außerhalb der beiden Magnetsensoren 16 und 17 positioniert werden können, vor allem möglichst dicht an diesen dran, weist die Leiterplatte 15' in diesem Fall jeweils in radialer Richtung geöffnete U-förmige Schlitze 29' auf (vgl. Fig. 9), in welche die Übertragungsflächen 26' eingreifen, wobei in diesem Fall jeweils zwei kleinere, schmale Übertragungsflächen 26' vorgesehen sind statt einer länglichen wie bei den Beispielen aus den Fig. 1 und 2.

Die Führungsnut 28 im ersten Gehäuseteil 13 dient bei diesem Beispiel nicht zur Führung beim radialen Verschieben der zweiten Baugruppe 11" relativ zur ersten Baugruppe 12', sondern insbesondere zum Fixieren der zweiten Baugruppe 11‴in der Zielposition, insbesondere zum Verrasten der zweiten Gehäuseteils 18" in der Zielposition am ersten Gehäuseteil 13.

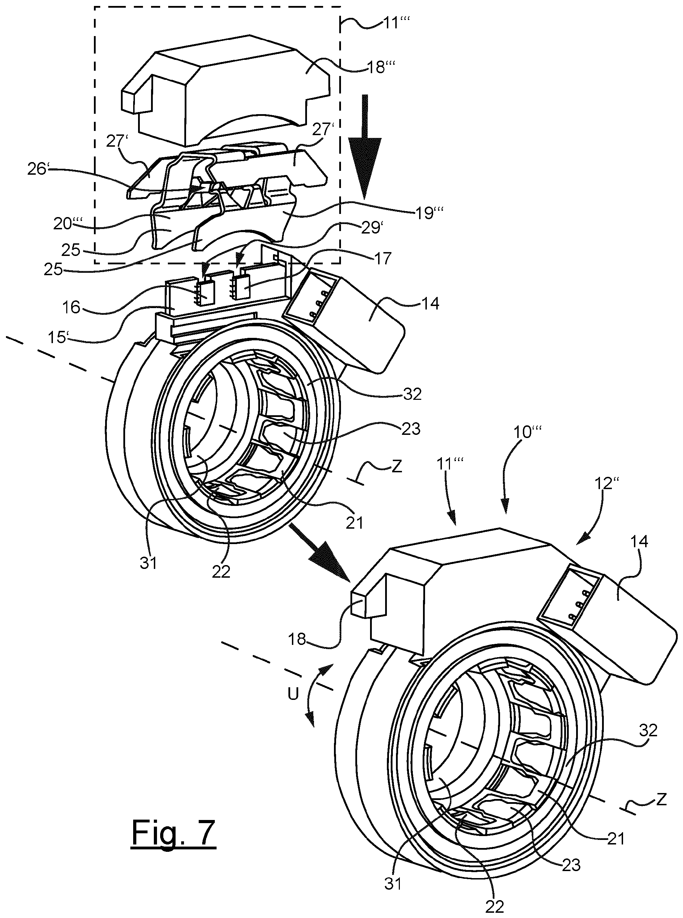

**Fig. 7** zeigt Teile eines vierten Ausführungsbeispiels einer erfindungsgemäßen Drehmomentsensorvorrichtung 10‴ in verschiedenen Montagezuständen in teilweiser Explosionsdarstellung, wobei diese Drehmomentsensorvorrichtung 10‴ im Wesentlichen wie die Drehmomentsensorvorrichtung 10" ausgebildet ist, jedoch eine entsprechende, radial montierbare zweite Baugruppe 11‴ aufweist, die zwei U-förmig gebogene Flussleiter 19‴ und 20‴ mit jeweils zwei Sammelflächen 25 und 27' (vgl. Fig. 9) aufweist analog zu der Drehmomentsensorvorrichtung aus Fig. 2.

**Fig. 8** zeigt die Leiterplatte 15' der Drehmomentsensorvorrichtung aus Fig. 6 und 7 mit den beiden daran befestigten Magnetsensoren 16 und 17 in perspektivischer Darstellung mit Blick auf eine erste Seite der Leiterplatte15', und **Fig. 9** zeigt die Leiterplatte 15' aus Fig. 8 mit Blick auf die andere Seite der Leiterplatte 15' und die beiden Flussleiter 19‴ und 20‴ der Drehmomentsensoranordnung aus Fig. 7, welche die Flussleiteranordnung der Drehmomentsensorvorrichtung 10‴ aus Fig. 7 bilden und in radialer Richtung aufgesteckt werden können.

Selbstverständlich ist eine Vielzahl von Abwandlungen, insbesondere konstruktiver Art, möglich, ohne den durch die Patentansprüche definierten Schutzbereich zu verlassen.

### Bezugszeichenliste:

- 10, 10',10", 10‴: erfindungsgemäße Drehmomentsensorvorrichtung
- 11, 11', 11", 11‴: zweite vormontierte Baugruppe
- 12, 12': erste vormontierte Baugruppe
- 13: erster Gehäuseteil
- 14: Steckeraufnahme
- 15, 15': Leiterplatte
- 16, 17: Magnetsensor
- 18, 18': zweiter Gehäuseteil
- 19, 19', 19", 19‴: erster Flussleiter
- 20, 20', 20", 20‴: zweiter Flussleiter
- 21: Statorhalter
- 22, 23: Stator
- 25, 25': erste Sammelfläche
- 26, 26': Übertragungsfläche
- 27, 27': zweite Sammelfläche
- 28: Führungsnut
- 29, 29: Aussparung, Schlitz
- 30: Verbindungsabschnitt
- 31: Befestigungshülse zur Befestigung des Statorhalters
- 32: Fixierring
- 33: Magnetanordnung, insbesondere Permanentringmagnet

- U: Umfangsrichtung
- Z: Zentrumsachse

## Patentansprüche

1. Drehmomentsensorvorrichtung (10, 10',10", 10‴) zur Erfassung eines auf eine Welle aufgebrachten Drehmoments, insbesondere zur Erfassung eines auf eine Lenkwelle eines Kraftfahrzeugs aufgebrachten Drehmoments,
wobei die Drehmomentsensorvorrichtung (10, 10',10", 10‴) eine Magnetanordnung (33), eine Statoranordnung (21, 22, 23, 31, 32), eine Flussleiteranordnung (19, 19', 19", 19"'; 20, 20', 20", 20‴) und eine Magnetsensoranordnung mit wenigstens einem Magnetsensor (16, 17) aufweist,
wobei die Magnetanordnung (33) zum Erzeugen wenigstens eines Magnetfeldes ausgebildet ist,
wobei die Flussleiteranordnung (19, 19', 19", 19‴; 20, 20', 20", 20‴) wenigstens einen ersten Flussleiter (19, 19', 19", 19‴) und einen zweiten Flussleiter (20, 20', 20", 20‴) aufweist und der erste Flussleiter (19, 19', 19", 19"') und der zweite Flussleiter (20, 20', 20", 20‴)jeweils wenigstens eine Übertragungsfläche (26, 26') aufweisen, wobei sich die wenigstens eine Übertragungsfläche (26, 26') des ersten Flussleiters (19, 19', 19", 19‴) und die wenigstens eine Übertragungsfläche (26, 26') des zweiten Flussleiters (20, 20', 20", 20‴) derart gegenüberliegen, dass sie einen axialen Spalt (S) zwischen sich bilden, in welchem wenigstens ein Magnetsensor (16, 17) der Magnetsensoranordnung anordbar ist,
wobei die Magnetanordnung (33) und die Statoranordnung (21, 22, 23, 31, 32) durch Aufbringen eines Drehmoments derart in Umfangsrichtung (U) um eine Zentrumsachse (Z) der Drehmomentsensorvorrichtung (10, 10',10", 10‴) relativ zueinander bewegbar sind, dass durch eine Relativbewegung zwischen der Magnetanordnung (33) und der Statoranordnung (21, 22, 23, 31, 32) in Umfangsrichtung (U) ein magnetischer Fluss in der Statoranordnung (21, 22, 23, 31, 32) erzeugbar ist, und
wobei die Drehmomentsensorvorrichtung (10, 10',10", 10‴) mehrere Baugruppen umfasst, darunter wenigstens eine erste vormontierte Baugruppe (12, 12') mit einem ersten Gehäuseteil (13) und eine zweite vormontierte Baugruppe (11, 11', 11", 11‴) mit einem zweiten Gehäuseteil (18, 18'),
**dadurch gekennzeichnet, dass**
die erste vormontierte Baugruppe (12, 12') wenigstens den ersten Gehäuseteil (13), die Statoranordnung (21, 22, 23, 31, 32) und den wenigstens einen Magnetsensor (16, 17) der Magnetsensoranordnung umfasst,
die zweite vormontierte Baugruppe (11, 11', 11", 11‴) wenigstens den zweiten Gehäuseteil (18, 18'), den ersten Flussleiter (19, 19', 19", 19‴) und den zweiten Flussleiter (20, 20', 20", 20‴) umfasst, und
der zweite Gehäuseteil (18, 18") auf den ersten Gehäuseteil (13) aufschiebbar oder aufsteckbar ist und/oder zumindest teilweise mit dem ersten Gehäuseteil (13) ineinanderschiebbar oder ineinander steckbar ist, wobei beim Aufschieben oder Aufstecken und/oder zumindest teilweisen Ineinanderschieben oder Ineinanderstecken wenigstens ein Magnetsensor (16, 17) derart in den Spalt (S) zwischen den Übertragungsflächen (26, 26') des ersten Flussleiters (19, 19', 19", 19"') und des zweiten Flussleiters (20, 20', 20", 20‴) einführbar ist, dass in einem funktionsgemäß zusammengesetzten Zustand der Drehmomentsensorvorrichtung (10, 10',10", 10‴), in welchem wenigstens die erste vormontierte Baugruppe (12, 12') und die zweite vormontierte Baugruppe (11, 11', 11", 11‴) funktionsgemäß zusammengesetzt sind, ein in der Statoranordnung (21, 22, 23, 31, 32) erzeugter magnetischer Fluss mittels des Magnetsensors (16, 17) erfassbar ist.

2. Drehmomentsensorvorrichtung (10, 10',10", 10"') nach Anspruch 1, **dadurch gekennzeichnet, dass** die zweite vormontierte Baugruppe (11, 11') in einer sich senkrecht zur Zentrumsachse (Z) der Drehmomentsensorvorrichtung (10, 10') erstreckenden Ebene in tangentialer Richtung oder in einer sich senkrecht zur Zentrumsachse (Z) der Drehmomentsensorvorrichtung (10", 10‴) erstreckenden Ebene in radialer Richtung auf den ersten Gehäuseteil (13) aufschiebbar oder aufsteckbar ist oder zumindest teilweise mit dem ersten Gehäuseteil (13) ineinanderschiebbar oder ineinander steckbar ist.

3. Drehmomentsensorvorrichtung (10, 10',10", 10‴) nach Anspruch 1 oder 2, **dadurch gekennzeichnet, dass** der zweite Gehäuseteil (13) zumindest an einer Unterseite oder an einer Unterseite und einer Seite zumindest teilweise geöffnet ist.

4. Drehmomentsensorvorrichtung (10, 10',10", 10‴) nach einem der vorstehenden Ansprüche, **dadurch gekennzeichnet, dass** der erste Gehäuseteil (13) und/oder der zweite Gehäuseteil (18, 18') Mittel (28) zum Ausrichten der beiden Gehäuseteile (13; 18,18') relativ zueinander und/oder zur Führung und/oder zum Ausrichten während eines Aufschiebens, Aufsteckens oder während eines zumindest teilweisen Ineinanderschiebens oder Ineinandersteckens aufweist.

5. Drehmomentsensorvorrichtung (10, 10',10", 10‴) nach einem der vorstehenden Ansprüche, **dadurch gekennzeichnet, dass** die Magnetsensoranordnung ferner eine Leiterplatte (15, 15') aufweist,
wobei wenigstens ein Magnetsensor (16, 17) an der Leiterplatte (15, 15') befestigt ist und die Leiterplatte (15, 15') eine Aussparung (29, 29') oder einen Bereich mit reduzierter Dicke gegenüber einem umgebenden Bereich aufweist,
wobei der wenigstens eine an der Leiterplatte (15, 15') befestigte Magnetsensor (16, 17) im Bereich der Aussparung (29, 29') oder im Bereich mit der reduzierten Dicke angeordnet ist, und
wobei sich der wenigstens eine Magnetsensor (16, 17) der Magnetsensoranordnung und die Aussparung (29, 29') oder der Bereich mit der reduzierten Dicke der Leiterplatte (15, 15') im Spalt (S) zwischen den Übertragungsflächen (26, 26') der beiden Flussleiter (19, 19', 19", 19‴; 20, 20', 20", 20‴) befindet.

6. Drehmomentsensorvorrichtung (10', 10‴) nach einem der vorstehenden Ansprüche, **dadurch gekennzeichnet, dass** in der Statoranordnung (21, 22, 23, 31, 32) in Abhängigkeit von dem auf die Drehmomentsensorvorrichtung (10', 10‴) aufgebrachten Drehmoment ein magnetischer Nutz-Fluss erzeugbar ist und ferner in Abhängigkeit von einem die Drehmomentsensorvorrichtung (10', 10‴) umgebenden Stör-Magnetfeld ein erster magnetischer Stör-Fluss,
wobei der erste Flussleiter (19', 19") und der zweite Flussleiter (20', 20") ferner jeweils eine erste Sammelfläche (25, 25') aufweisen, die jeweils zur zumindest teilweisen Bündelung und/oder zur zumindest teilweisen Weiterleitung des in der Statoranordnung (21, 22, 23, 31, 32) in Abhängigkeit von einem aufgebrachten Drehmoment erzeugten magnetischen Nutz-Flusses und/oder des in Abhängigkeit von einem die Drehmomentsensorvorrichtung (10', 10‴) umgebenden Stör-Magnetfeld erzeugten ersten magnetischen Stör-Flusses ausgebildet sind,
wobei die Flussleiteranordnung (19', 19‴; 20', 20‴) ferner eine mit wenigstens einer Übertragungsfläche (26, 26') magnetisch leitend gekoppelte, zweite Sammelfläche (27, 27') aufweist, die zur Erzeugung bzw. zur zumindest teilweisen Bündelung und/oder Weiterleitung eines zweiten magnetischen Stör-Flusses in Abhängigkeit von einem die Drehmomentsensorvorrichtung (10', 10‴) umgebenden Stör-Magnetfeld ausgebildet ist,
wobei die Flussleiteranordnung (19', 19‴; 20', 20‴) derart ausgebildet ist, dass sich, wenn die Drehmomentsensorvorrichtung (10', 10‴) von einem Stör-Magnetfeld umgeben ist, ein in der ersten Sammelfläche (25, 25') einer der Flussleiter (19', 19‴) zumindest teilweise gebündelter und über die wenigstens eine zugehörige Übertragungsfläche (26, 26') dieses Flussleiters (19', 19‴) an den Magnetsensor (16, 17) übertragener erster Stör-Fluss-Anteil und ein in der zweiten Sammelfläche (27, 27') zumindest teilweise gebündelter und über eine zugehörige Übertragungsfläche (26, 26') des anderen Flussleiters (20', 20‴) an den Magnetsensor (16, 17) übertragener, zweiter Stör-Fluss-Anteil des magnetischen Flusses zumindest teilweise aufheben.

7. Verfahren zum zumindest teilweisen Zusammenbau einer Drehmomentsensorvorrichtung (10, 10',10", 10‴) nach einem der Ansprüche 1 bis 6,
wobei die Drehmomentsensorvorrichtung (10, 10',10", 10‴) die Magnetanordnung (33), die Statoranordnung (21, 22, 23, 31, 32), die Flussleiteranordnung (19, 19', 19", 19‴; 20, 20', 20", 20‴) und die Magnetsensoranordnung mit dem wenigstens einem Magnetsensor (16, 17) aufweist,
wobei die Magnetanordnung (33) zum Erzeugen des wenigstens einen Magnetfeldes ausgebildet ist,
wobei die Flussleiteranordnung (19, 19', 19", 19‴; 20, 20', 20", 20‴) den wenigstens einen ersten Flussleiter (19, 19', 19", 19‴) und den wenigstens einen zweiten Flussleiter (20, 20', 20", 20‴) aufweist und der erste Flussleiter (19, 19', 19", 19‴) und der zweite Flussleiter (20, 20', 20", 20‴) jeweils wenigstens eine Übertragungsfläche (26, 26') aufweisen, und
wobei die Drehmomentsensorvorrichtung (10, 10',10", 10‴) ferner das erste Gehäuseteil (13) und das zweite Gehäuseteil (18, 18') aufweist, **gekennzeichnet durch** die Schritte:
a) Vormontieren der ersten Baugruppe (12, 12'), die wenigstens den ersten Gehäuseteil (13), die Statoranordnung (21, 22, 23, 31, 32), und wenigstens einen Magnetsensor (16, 17) der Magnetsensoranordnung umfasst,
b) Vormontieren der zweiten Baugruppe (11, 11', 11", 11‴), die wenigstens den zweiten Gehäuseteil (18, 18') und den ersten Flussleiter (19, 19', 19", 19‴) und den zweiten Flussleiter (20, 20', 20", 20‴) umfasst, wobei der erste Flussleiter (19, 19', 19", 19‴) und der zweite Flussleiter (20, 20', 20", 20‴) derart mit dem zweiten Gehäuseteil (18, 18') verbunden werden, dass sich die wenigstens eine Übertragungsfläche (26, 26') des ersten Flussleiters (19, 19', 19", 19‴) und die wenigstens eine Übertragungsfläche (26, 26') des zweiten Flussleiters (20, 20', 20", 20‴) derart gegenüberliegen, dass sie den axialen Spalt (S) zwischen sich bilden, in dem der wenigstens eine Magnetsensor (16, 17) der Magnetsensoranordnung anordbar ist,
c) Zusammensetzen der ersten vormontierten Baugruppe (12, 12') und der zweiten vormontierten Baugruppe (11, 11', 11", 11‴), wobei der wenigstens eine Magnetsensor (16, 17) der Magnetsensoranordnung derart in den Spalt (S) zwischen den Übertragungsflächen (26, 26') des ersten Flussleiters (19, 19', 19", 19‴) und des zweiten Flussleiters (20, 20', 20", 20‴) eingeführt wird, dass der in der Statoranordnung (21, 22, 23, 31, 32) erzeugter magnetischer Fluss mittels des Magnetsensors (16, 17) erfassbar ist, und
d) Fixieren der beiden vormontierten Baugruppen (12, 12'; 11, 11', 11", 11‴) in ihrer Position relativ zueinander.

8. Verfahren nach Anspruch 7, wobei das Vormontieren der zweiten Baugruppe (11, 11', 11", 11‴) in Schritt b) erfolgt, indem
zunächst der zweite Gehäuseteil (18, 18') und wenigstens der erste Flussleiter (19, 19', 19", 19‴) und der zweite Flussleiter (20, 20', 20", 20‴) bereitgestellt werden, und
dann der erste Flussleiter (19, 19', 19", 19‴) und der zweite Flussleiter (20, 20', 20", 20‴) in den zweiten Gehäuseteil (18, 18') eingesetzt werden und mit diesem verbunden werden.

9. Verfahren nach Anspruch 7 oder 8, wobei das Zusammensetzen in Schritt c) erfolgt, indem
in einem ersten Schritt c1) die erste vormontierte Baugruppe (12) und die zweite vormontierte Baugruppe (11, 11') in einer Eingriffsposition miteinander in Kontakt gebracht werden, und
in einem weiteren Schritt c2) die zweite vormontierte Baugruppe (11, 11') in einer sich senkrecht zur Zentrumsachse (Z) der Drehmomentsensorvorrichtung (10, 10') erstreckenden Ebene in tangentialer Richtung relativ zur ersten Baugruppe (12) bis in eine Zielposition verschoben wird.

10. Verfahren nach Anspruch 9,
wobei der zweite Gehäuseteil (18) zumindest an einer Unterseite und an einer Seite zumindest teilweise geöffnet ist, und
wobei bei der Vormontage in Schritt b) wenigstens der erste Flussleiter (19, 19') und/oder der zweite Flussleiter (20, 20') von der geöffneten Unterseite her oder von der geöffneten Seite her in den zweiten Gehäuseteil (18) eingebracht werden.

11. Verfahren nach Anspruch 10, wobei
in Schritt c1) die zweite vormontierte Baugruppe (11, 11') derart ausgerichtet wird, dass sich in der Eingriffsposition der zweiten vormontierten Baugruppe (11, 11') die geöffnete Seite des zweiten Gehäuseteils (18, 18') wenigstens im Wesentlichen orthogonal zur Verschieberichtung erstreckt, und
in Schritt c2) beim Verschieben in tangentialer Richtung die zweite vormontierte Baugruppe (11, 11') mit der geöffneten Seite voran von der Eingriffsposition in die Zielposition verschoben wird.

12. Verfahren nach Anspruch 7 oder 8, wobei das Zusammensetzen in Schritt c) erfolgt, indem
in einem ersten Schritt c1) die erste vormontierte Baugruppe (12') und die zweite vormontierte Baugruppe (11", 11‴) in einer Eingriffsposition miteinander in Kontakt gebracht werden, und
in einem weiteren Schritt c2) die zweite vormontierte Baugruppe (11", 11‴) in einer sich senkrecht zur Zentrumsachse (Z) der Drehmomentsensorvorrichtung (10", 10‴) erstreckenden Ebene in radialer Richtung relativ zur ersten Baugruppe (12') bis in eine Zielposition verschoben wird.

13. Verfahren nach Anspruch 12,
wobei der zweite Gehäuseteil (18') zumindest an einer Unterseite teilweise geöffnet ist, und
wobei bei der Vormontage in Schritt b) wenigstens der erste Flussleiter (19", 19‴) und/oder der zweite Flussleiter (20", 20‴), insbesondere die gesamte Flussleiteranordnung (19",20"; 19‴, 20‴), von der geöffneten Unterseite her in den zweiten Gehäuseteil (18') eingebracht werden.

14. Verfahren nach Anspruch 12 oder 13, wobei
in Schritt c1) die zweite vormontierte Baugruppe (11", 11‴) derart ausgerichtet wird, dass sich in der Eingriffsposition der zweiten vormontierten Baugruppe (11", 11‴) die geöffnete Unterseite wenigstens im Wesentlichen orthogonal zur Verschieberichtung erstreckt, und
in Schritt c2) beim Verschieben in radialer Richtung die zweite vormontierte Baugruppe (11", 11‴) mit der geöffneten Unterseite voran von der Eingriffsposition in die Zielposition verschoben wird.

15. Verfahren nach einem der Ansprüche 7 bis 14,
wobei die Magnetsensoranordnung ferner eine Leiterplatte (15, 15') aufweist und wenigstens ein Magnetsensor (16, 17) an der Leiterplatte (15, 15') befestigt ist,
wobei die Leiterplatte (15, 15') eine Aussparung (29, 29') oder einen Bereich mit reduzierter Dicke gegenüber einem umgebenden Bereich aufweist,
wobei der wenigstens eine an der Leiterplatte (15, 15') befestigte Magnetsensor (16, 17) im Bereich der Aussparung (29, 29') oder im Bereich mit der reduzierten Dicke angeordnet ist, und
wobei das Zusammensetzen der ersten vormontierten Baugruppe (12, 12') und der zweiten vormontierten Baugruppe (11, 11', 11", 11‴) in Schritt c) derart erfolgt, dass sich nach dem Einführen des wenigstens einen Magnetsensors (16, 17) der Magnetsensoranordnung in den Spalt (S) zwischen den Übertragungsflächen (26, 26') des ersten Flussleiters (19, 19', 19", 19‴) und des zweiten Flussleiters (20, 20', 20", 20‴) die Aussparung (29, 29') oder der Bereich mit der reduzierten Dicke der Leiterplatte (15, 15') ebenfalls im Spalt (S) zwischen den Übertragungsflächen (26, 26') der beiden Flussleiter (19, 19', 19", 19‴; 20, 20', 20",20‴) befindet.

## Claims

1. Torque sensor device (10, 10', 10", 10‴) for detecting torque applied to a shaft, in particular for detecting torque applied to a steering shaft of a motor vehicle,
wherein the torque sensor device (10, 10', 10", 10‴) comprises a
magnetic assembly (33), a stator assembly (21, 22, 23, 31, 32), a flux conductor assembly (19, 19', 19", 19"'; 20, 20', 20", 20‴) and a magnetic sensor assembly with at least one magnetic sensor (16, 17),
wherein the magnet assembly (33) is designed to generate at least one magnetic field,
wherein the flux conductor arrangement (19, 19', 19", 19‴; 20, 20', 20", 20"') has at least one first flux conductor (19, 19', 19", 19‴) and a second flux conductor (20, 20', 20", 20"'), and the first flux conductor (19, 19', 19", 19‴) and the second flow conductors (20, 20', 20", 20‴) each have at least one transmission surface (26, 26'), wherein the at least one transmission surface (26, 26') of the first flow conductor (19, 19', 19", 19‴), and the at least one transmission surface surface (26, 26') of the second flux conductor (20, 20', 20", 20"'), such that they form an axial gap (S) between them, in which at least one magnetic sensor (16, 17) of the magnetic sensor arrangement can be arranged,
wherein the magnet arrangement (33) and the stator arrangement (21, 22, 23, 31, 32) are movable relative to each other in the circumferential direction (U) about a central axis (Z) of the torque sensor device (10, 10', 10", 10‴) in such a way that a magnetic flux can be generated in the stator assembly (21, 22, 23, 31, 32) in the circumferential direction (U) by a relative movement between the magnet assembly (33) and the stator assembly (21, 22, 23, 31, 32)
circumferential direction (U) generates a magnetic flux in the stator arrangement (21, 22, 23, 31, 32), and
wherein the torque sensor device (10, 10', 10", 10‴) comprises several assemblies, including at least one first pre-assembled assembly (12, 12') with a first housing part (13) and a second pre-assembled assembly (11, 11', 11", 11‴) with a second housing part (18, 18'),
**characterised in that**
the first pre-assembled assembly (12, 12') comprises at least the first housing part (13), the stator arrangement (21, 22, 23, 31, 32) and the at least one magnetic sensor (16, 17) of the magnetic sensor assembly,
the second pre-assembled module (11, 11', 11", 11‴) comprises at least the second housing part (18, 18'), the first flux conductor (19, 19', 19", 19‴), and the second flux conductor (20, 20', 20", 20"') and
the second housing part (18, 18") can be pushed or plugged onto the first housing part (13) and/or can be at least partially pushed or plugged into the first housing part (13), whereby at least one magnetic sensor (16, 17) is inserted into the gap (S) between the transmission surfaces (26, 26') of the first flux conductor (19, 19', 19") in such a way that 19") and the second flow conductor (20, 20', 20", 20") can be inserted, such that in a functionally assembled state of the torque sensor device (10, 10', 10", 10") in which at least the first pre-assembled assembly (12, 12') and the second pre-assembled assembly (11, 11', 11", 11‴) are functionally , a magnetic flux generated in the stator arrangement (21, 22, 23, 31, 32) can be detected by means of the magnetic sensor (16, 17).

2. Torque sensor device (10, 10', 10", 10‴) according to claim 1, **characterised in that characterised in that** the second pre-assembled assembly (11, 11') can be pushed or attached onto the first housing part (13) in a tangential direction in a plane extending perpendicular to the centre axis (Z) of the torque sensor device (10, 10') or in a plane extending perpendicular to the centre axis (Z) of the torque sensor device (10", 10‴) .

3. Torque sensor device (10, 10', 10", 10‴) according to claim 1 or 2, **characterised in that characterised in that** the second housing part (13) is at least partially open on at least one underside or on one underside and one side.

4. Torque sensor device (10, 10', 10", 10‴) according to one of the preceding claims, **characterised in that** the first housing part (13) and/or the second housing part (18, 18') has means (28) for aligning the two housing parts (13; 18, 18') relative to each other and/or for guiding and/or aligning during sliding on, plugging on or during at least partial sliding into or plugging into each other.

5. Torque sensor device (10, 10', 10", 10‴) according to one of the preceding claims, **characterised in that** the magnetic sensor arrangement further comprises a printed circuit board (15, 15'),
wherein at least one magnetic sensor (16, 17) is mounted on the printed circuit board (15, 15'). is attached and the printed circuit board (15, 15') has a recess (29, 29') or an area with reduced thickness compared to a surrounding area,
wherein the at least one magnetic sensor (16, 17) attached to the printed circuit board (15, 15') is arranged in the area of the recess (29, 29') or in the area with the reduced thickness, and
wherein the at least one magnetic sensor (16, 17) of the magnetic sensor arrangement and the recess (29, 29') or the area with the reduced thickness of the printed circuit board (15, 15') are located in the gap (S) between the transmission surfaces (26, 26') of the two flux conductors (19, 19', 19", 19‴; 20, 20', 20", 20‴) is located.

6. Torque sensor device (10', 10‴) according to one of the preceding claims, **characterised in that**, in the stator arrangement (21, 22, 23, 31, 32), a magnetic useful flux can be generated as a function of the torque applied to the torque sensor device (10', 10‴) applied to the torque sensor device (10', 10‴) and, furthermore, a first magnetic interference flux can be generated in the stator arrangement (21, 22, 23, 31, 32) as a function of an interference magnetic field surrounding the torque sensor device (10', 10‴).
wherein the first flux conductor (19', 19") and the second flux conductor (20', 20") further each have a first collecting surface (25, 25') which is each for at least partially bundling and/or at least partially forwarding the magnetic useful flux generated in the stator arrangement (21, 22, 23, 31, 32) in response to an applied torque and/or the first magnetic interference flux generated in response to an interference magnetic field surrounding the torque sensor device (10', 10"'),
wherein the flux conductor arrangement (19', 19‴; 20', 20‴) further comprises a second collecting surface (27, 27') magnetically coupled to at least one transmission surface (26, 26') in a magnetically conductive manner, which is intended for generating or at least partially
Bundling and/or forwarding of a second magnetic interference flux depending on an interference magnetic field surrounding the torque sensor device (10', 10‴) is formed,
wherein the flux conductor arrangement (19', 19‴; 20', 20‴) is designed such that, when the torque sensor device (10', 10‴) is surrounded by an interference magnetic field, an interference flux component transmitted to the magnetic sensor (16, 17) via the at least one associated transmission surface (26, 26') of this flux conductor (19', 19‴) is at least partially concentrated in the first collecting surface (25, 25') of one of the flux conductors (19', 19"') to the magnetic sensor (16, 17), and a first interference flux component that is at least partially concentrated in the second collecting surface (27, 27') and transmitted to the magnetic sensor (16, 17) via a corresponding transmission surface (26, 26') of the other flux conductor (20', 20") to the magnetic sensor (16, 17).

7. Method for at least partially assembling a torque sensor device (10, 10', 10", 10‴) according to one of claims 1 to 6,
wherein the torque sensor device (10, 10', 10", 10‴) comprises the magnet assembly (33), the stator assembly (21, 22, 23, 31, 32), the flux conductor arrangement (19, 19', 19", 19"' (20, 20', 20", 20‴) and the magnetic sensor arrangement with at least one magnetic sensor (16, 17)
wherein the magnet arrangement (33) is designed to generate the at least one magnetic field,
wherein the flux conductor arrangement (19, 19', 19", 19"'; 20, 20', 20", 20‴) the at least one first current conductor (19, 19', 19", 19"') and the at least one second flow conductor (20, 20', 20", 20‴) and the first flow conductor (19, 19', 19", 19‴) and the second flow conductor (20, 20', 20", 20‴) each have at least one transfer surface (26, 26'), and
wherein the torque sensor device (10, 10', 10", 10‴) further comprises the first housing part (13) and the second housing part (18, 18'),
**characterised by** the steps:
a) Pre-assembly of the first assembly (12, 12'), which comprises at least the first housing part (13), the stator arrangement (21, 22, 23, 31, 32), and at least one magnetic sensor (16, 17) of the magnetic sensor arrangement,
b) Pre-assembly of the second assembly (11, 11', 11", 11‴), which comprises at least the second housing part (18, 18') and the first flux conductor (19, 19', 19", 19‴), and the second flux conductor (20, 20', 20", 20"'), wherein the first flux conductor (19, 19', 19", 19"'), and the second flux conductor (20, 20', 20", 20‴) are connected to the second housing part (18, 18') in such a way that the at least one transmission surface (26, 26') of the first current conductor (19, 19', 19", 19"') and the at least one transfer surface (26, 26') of the second flux conductor (20, 20', 20", 20"') are arranged opposite each other in such a way that they form the axial gap (S) between them, in which the at least one magnetic sensor (16, 17) of the magnetic sensor arrangement ( ) can be arranged. magnetic sensor arrangement can be arranged,
c) Assembling the first pre-assembled module (12, 12') and the second pre-assembled module (11, 11', 11", 11‴), wherein the at least one magnetic sensor (16, 17) of the magnetic sensor arrangement is inserted into the gap (S) between the transmission surfaces (26, 26') of the first flux conductor (19, 19', 19", 19"') and the second flux conductor (20, 20', 20", 20‴) in such a way that the magnetic flux generated in the stator arrangement (21, 22, 23, 31, 32) can be detected by means of the magnetic sensor (16, 17), and
d) fixing the two pre-assembled assemblies (12, 12'; 11, 11', 11", 11‴ their position relative to each other.

8. Method according to claim 7, wherein the pre-assembly of the second assembly (11, 11', 11", 11‴) in step b) is carried out by
first providing the second housing part (18, 18') and at least the first flow conductor (19, 19', 19", 19‴) and the second flow conductor (20, 20', 20", 20‴), and
then inserting the first flux conductor (19, 19', 19", 19‴), the second flux conductor (20, 20', 20", 20‴) are inserted into the second housing part (18, 18') and connected to it.

9. Method according to claim 7 or 8, wherein the assembly in step c) is performed by
in a first step c1), the first pre-assembled assembly (12) and the second pre-assembled assembly (11, 11') are brought into contact with each other in an engagement position, and
in a further step c2), the second pre-assembled assembly (11, 11') is moved in a tangential direction relative to the first assembly (12) into a target position in a plane extending perpendicular to the central axis (Z) of the torque sensor device (10, 10').

10. Method according to claim 9,
wherein the second housing part (18) is at least partially open on at least one underside and on one side, and
wherein, during pre-assembly in step b), at least the first current conductor (19, 19') and/or the second current conductor (20, 20') are inserted into the second housing part (18) from the open underside or from the open side.

11. Method according to claim 10, wherein
in step c1), the second pre-assembled assembly (11, 11') is aligned in such a way that, in the engagement position of the second pre-assembled assembly (11, 11'), the open side of the second housing part (18, 18') extends at least substantially orthogonally to the direction of displacement, and
in step c2), when moving in the tangential direction, the second pre-assembled assembly (11, 11') is moved from the engagement position to the target position with the open side facing forward.

12. Method according to claim 7 or 8, wherein the assembly in step c) is performed by
in a first step c1), the first pre-assembled assembly (12') and the second pre-assembled assembly (11", 11‴) are brought into contact with each other in an engagement position, and
in a further step c2), the second pre-assembled assembly (11", 11‴) is moved in a plane extending perpendicular to the central axis (Z) of the torque sensor device (10", 10‴) in a radial direction relative to the first assembly (12') until it reaches a target position.

13. Method according to claim 12,
wherein the second housing part (18') is partially open at least on one underside, and
wherein, during pre-assembly in step b), at least the first flux conductor (19", 19‴) and/or the second flux conductor (20", 20‴), in particular the entire flux conductor arrangement (19", 20"; 19‴, 20‴) is inserted into the second housing part (18') from the open underside.

14. Method according to claim 12 or 13, wherein
in step c1), the second pre-assembled assembly (11", 11‴) is aligned in such a way that, in the engagement position of the second pre-assembled assembly (11", 11‴), the open underside extends at least substantially orthogonally to the direction of displacement, and
in step c2), when moving in the radial direction, the second pre-assembled assembly (11", 11‴), with the open underside leading, is moved from the engagement position to the target position.

15. Method according to one of claims 7 to 14,
wherein the magnetic sensor arrangement further comprises a printed circuit board (15, 15') and at least one magnetic sensor (16, 17) is attached to the printed circuit board (15, 15'),
wherein the printed circuit board (15, 15') has a recess (29, 29') or an area with reduced thickness relative to a surrounding area,
wherein the at least one magnetic sensor (16, 17) attached to the printed circuit board (15, 15') is arranged in the area of the recess (29, 29') or in the area with the reduced thickness, and
wherein the assembly of the first pre-assembled assembly (12, 12') and the second pre-assembled assembly (11, 11', 11") 11") in step c) is carried out in such a way that, after the at least one magnetic sensor (16, 17) of the magnetic sensor arrangement has been inserted into the gap (S) between the transmission surfaces (26, 26') of the first flux conductor (19, 19', 19", 19"') and the second flux conductor (20, 20', 20", 20‴) the recess (29, 29') or the area with the reduced thickness of the conductor board (15, 15') is also located in the gap (S) between the transmission surfaces (26, 26') of the two flux conductors (19, 19', 19", 19‴; 20, 20', 20", 20‴) is also located in the gap (S) between the transmission surfaces (26, 26') of the two flux conductors (19,

## Revendications

1. Dispositif capteur de couple (10, 10', 10", 10‴) destiné à détecter un couple appliqué à un arbre, en particulier destiné à détecter un couple appliqué à un arbre de direction d'un véhicule automobile,
le dispositif capteur de couple (10, 10', 10", 10"') comprenant un dispositif magnétique (33), un dispositif statorique (21, 22, 23, 31, 32), un ensemble conducteur de flux (19, 19', 19", 19"'; 20, 20', 20", 20‴) et un ensemble capteur magnétique avec au moins un capteur magnétique (16, 17),
l'ensemble magnétique (33) étant conçu pour générer au moins un champ magnétique,
l'agencement de conducteurs de flux (19, 19', 19", 19"'; 20, 20', 20", 20"') au moins un premier conducteur de flux (19, 19', 19", 19"'), et un deuxième conducteur de flux (20, 20', 20", 20"') et le premier conducteur de flux (19, 19', 19", 19"') et le deuxième conducteur de courant (20, 20', 20", 20"') comportant chacun au moins une surface de transmission (26, 26') du premier conducteur de flux (19, 19', 19", 19"'), et la au moins une surface de transmission (26, 26') du deuxième conducteur de flux (20, 20', 20", 20"') sont disposées en vis-à-vis de telle sorte qu'elles forment entre elles un interstice axial (S) dans lequel peut être disposé au moins un capteur magnétique (16, 17) de l'agencement de capteurs magnétiques,
l'ensemble magnétique (33) et l'ensemble statorique (21, 22, 23, 31, 32) pouvant être déplacés l'un par rapport à l'autre dans la direction circonférentielle (U) autour d'un axe central (Z) de l'ensemble capteur de couple (10, 10', 10", 10"') de telle sorte qu'un mouvement relatif entre l'ensemble magnétique (33) et l'ensemble statorique (21, 22, 23, 31, 32) dans direction circonférentielle (U) génère un flux magnétique dans l'ensemble de stator (21, 22, 23, 31, 32), et
le dispositif capteur de couple (10, 10', 10", 10"') comprend plusieurs modules, dont au moins un premier module préassemblé (12, 12') avec une première partie de boîtier (13) et un deuxième module préassemblé (11, 11', 11", 11‴) avec une deuxième partie de boîtier (18, 18'),
**caractérisé en ce que**
le premier ensemble préassemblé (12, 12') comprend au moins la première partie de boîtier (13), l'agencement de stator (21, 22, 23, 31, 32) et ^{le} au moins un capteur magnétique (16, 17) de l'ensemble de capteurs magnétiques,
le deuxième module préassemblé (11, 11', 11", 11‴) comprend au moins la deuxième partie de boîtier (18, 18'), le premier conducteur de flux (19, 19', 19", 19‴) et le deuxième conducteur de flux (20, 20', 20", 20‴) et
la deuxième partie du boîtier (18, 18") peut être enfilée ou emboîtée sur la première partie du boîtier (13) et/ou peut être au moins partiellement emboîtée ou enfilée dans la première partie du boîtier (13), au moins un capteur magnétique (16, 17) est inséré dans la fente (S) entre les surfaces de transmission (26, 26') du premier conducteur de flux (19, 19', 19") 19") et du deuxième conducteur de flux (20, 20', 20", 20") de manière à ce que, dans un état fonctionnel assemblé du dispositif de capteur de couple (10, 10', 10", 10") dans lequel au moins le premier ensemble préassemblé (12, 12') et le deuxième ensemble préassemblé (11, 11', 11", 11") sont assemblés de manière fonctionnelle , un flux magnétique généré dans l'agencement de stator (21, 22, 23, 31, 32) peut être détecté au moyen du capteur magnétique (16, 17).

2. Dispositif capteur de couple (10, 10', 10", 10‴) selon la revendication 1, **caractérisé en ce que**
**caractérisé en ce que** le deuxième ensemble préassemblé (11, 11') peut être enfilé ou emboîté dans le sens radial sur la première partie du boîtier (13) dans un plan s'étendant perpendiculairement à l'axe central (Z) du dispositif capteur de couple (10, 10') ou dans un plan s'étendant perpendiculairement à l'axe central (Z) du dispositif capteur de couple (10", 10‴) .

3. Dispositif capteur de couple (10, 10', 10", 10‴) selon la revendication 1 ou 2, **caractérisé en ce que**
**caractérisé en ce que** la deuxième partie du boîtier (13) est au moins partiellement ouverte sur au moins une face inférieure ou sur une face inférieure et un côté.

4. Dispositif capteur de couple (10, 10', 10", 10‴) selon l'une des revendications précédentes revendications précédentes, **caractérisé en ce que** la première partie de boîtier (13) et/ou la deuxième partie de boîtier (18, 18') comportent des moyens (28) pour aligner les deux parties de boîtier (13 ; 18, 18') l'une par rapport à l'autre et/ou pour le guidage et/ou l'alignement pendant un enfilage, un emboîtement ou pendant un emboîtement ou un enfilage au moins partiel l'un dans l'autre.

5. Dispositif capteur de couple (10, 10', 10", 10‴) selon l'une des revendications précédentes, **caractérisé en ce que** le dispositif capteur magnétique comprend en outre une carte de circuit imprimé (15, 15'),
au moins un capteur magnétique (16, 17) étant fixé à la carte de circuit imprimé (15, 15') est fixé et la carte de circuit imprimé (15, 15') présente un évidement (29, 29') ou une zone d'épaisseur réduite par rapport à une zone environnante,
le ou les capteurs magnétiques (16, 17) fixés à la carte de circuit imprimé (15, 15') étant disposés dans la zone de l'évidement (29, 29') ou dans la zone d'épaisseur réduite, et
le au moins un capteur magnétique (16, 17) de l' dispositif de capteurs magnétiques et l'évidement (29, 29') ou la zone d'épaisseur réduite de la carte de circuit imprimé (15, 15') se trouvent dans l'interstice (S) entre les surfaces de transmission (26, 26') des deux conducteurs de flux (19, 19', 19", 19"'; 20, 20', 20", 20"') se trouve dans l'espace (S) entre les surfaces de transmission (26, 2

6. Dispositif capteur de couple (10', 10‴) selon l'une des revendications précédentes, **caractérisé en ce que**, dans l'agencement de stator (21, 22, 23, 31, 32), en fonction du couple appliqué au dispositif capteur de couple (10', 10‴) , et **en ce qu'**un premier flux magnétique parasite peut être généré en fonction d'un champ magnétique parasite entourant le dispositif de détection de couple (10', 10"')
le premier conducteur de flux (19', 19") et le deuxième conducteur de flux (20', 20") comportant en outre chacun une première surface collectrice (25, 25') qui sert respectivement à concentrer au moins partiellement et/ou à transmettre au moins partiellement le flux magnétique utile généré dans l'agencement de stator (21, 22, 23, 31, 32) en fonction d'un couple appliqué et/ou du premier flux magnétique parasite généré en fonction d'un champ magnétique parasite entourant le dispositif capteur de couple (10', 10"') sont conçues,
l'agencement de conducteurs de flux (19', 19" ; 20', 20") comportant en outre une deuxième surface collectrice (27, 27') couplée de manière magnétiquement conductrice à au moins une surface de transmission (26, 26'), qui sert à générer ou à au moins partiellement Concentration et/ou transmission d'un deuxième flux magnétique parasite en fonction d'un champ magnétique parasite entourant le dispositif capteur de couple (10', 10"'),
l'agencement de conducteurs de flux (19', 19" ; 20', 20") étant conçu de telle sorte que, lorsque le dispositif capteur de couple (10', 10") est entouré d'un champ magnétique parasite, un flux au moins partiellement concentré dans la première surface collectrice (25, 25') de l'un des conducteurs de flux (19', 19"') et transmis au moins en partie via la surface de transmission associée (26, 26') de ce conducteur de flux (19', 19"') au capteur magnétique (16, 17), et une première partie de flux perturbateur au moins partiellement concentrée dans la deuxième surface collectrice (27, 27') et transmise au capteur magnétique (16, 17) via une surface de transmission associée (26, 26') de l'autre conducteur de flux (20', 20") au capteur magnétique (16, 17).

7. Procédé d'assemblage au moins partiel d'un dispositif capteur de couple (10, 10', 10", 10‴) selon l'une des revendications 1 à 6,
le dispositif capteur de couple (10, 10', 10", 10‴) comprenant l' ensemble d'aimants (33), l' ensemble statorique (21, 22, 23, 31, 32), l' ensemble conducteur de flux (19, 19', 19", 19‴ ; 20, 20', 20", 20‴) et l'ensemble capteur magnétique avec le au moins un capteur magnétique (16, 17)
l'ensemble magnétique (33) étant conçu pour générer au moins un champ magnétique,
l'agencement de conducteurs de flux (19, 19', 19", 19"'; 20, 20', 20", 20‴) le - au moins un premier conducteur de flux (19, 19', 19", 19‴) et au moins un deuxième conducteurs de flux (20, 20', 20", 20"'), et le premier conducteur de flux (19, 19', 19", 19"') et le deuxième conducteur de flux (20, 20', 20", 20"') comportent chacun au moins une surface de transmission (26, 26'), et
le dispositif capteur de couple (10, 10', 10", 10‴) comprenant en outre le premier partie de boîtier (13) et la deuxième partie de boîtier (18, 18') de
caractérisation par les étapes suivantes :
a) Préassemblage du premier module (12, 12') comprenant au moins la première partie de boîtier (13), l'ensemble statorique (21, 22, 23, 31, 32) et au moins un capteur magnétique (16, 17) de l'ensemble de capteurs magnétiques,
b) Préassemblage du deuxième module (11, 11', 11", 11‴) qui comprend au moins la deuxième partie de boîtier (18, 18') et le premier conducteur de flux (19, 19', 19", 19"'), et le deuxième conducteur de flux (20, 20', 20", 20"'), le premier conducteur de flux (19, 19', 19", 19"'), et le deuxième conducteur de flux (20, 20', 20", 20"') sont reliés à la deuxième partie du boîtier (18, 18') de telle sorte que la au moins une surface de transmission (26, 26') du premier conducteur de flux (19, 19', 19", 19‴) et la au moins une surface de transmission (26, 26') du deuxième conducteur de flux (20, 20', 20", 20"') sont disposées de manière à former entre elles l'espace axial (S) de l' , dans lequel peut être disposé au moins un capteur magnétique (16, 17) de l' dispositif de capteurs magnétiques (16, 17) peut être disposé,
c) assemblage du premier module préassemblé (12, 12') et du deuxième module préassemblé (11, 11', 11", 11‴), le au moins un capteur magnétique (16, 17) de l'ensemble de capteurs magnétiques étant introduit de telle sorte dans l'interstice (S) entre les surfaces de transmission (26, 26') du premier conducteur de flux (19, 19', 19", 19"') et du deuxième conducteur de flux (20, 20', 20", 20"') de telle sorte que le flux magnétique généré dans le dispositif de stator (21, 22, 23, 31, 32) puisse être détecté au moyen du capteur magnétique (16, 17), et
d) fixation des deux modules prémontés (12, 12' ; 11, 11', 11", 11‴) dans leur position relative l'un par rapport à l'autre.

8. Procédé selon la revendication 7, dans lequel le pré-montage du deuxième ensemble (11, 11', 11", 11‴) à l'étape b) s'effectue en
on fournit d'abord la deuxième partie de boîtier (18, 18') et au moins le premier conducteur de flux (19, 19', 19", 19‴) et le deuxième conducteur de flux (20, 20', 20", 20"'), puis
ensuite le premier conducteur de flux (19, 19', 19", 19"'), le deuxième conducteur de flux (20, 20', 20", 20"' sont insérés dans la deuxième partie du boîtier (18, 18') et reliés à celle-ci.

9. Procédé selon la revendication 7 ou 8, l'assemblage à l'étape c) étant effectué en
dans une première étape c1), le premier ensemble préassemblé (12) et le deuxième ensemble préassemblé (11, 11') sont mis en contact l'un avec l'autre dans une position d'engagement, et
dans une étape supplémentaire c2), le deuxième ensemble préassemblé (11, 11') est déplacé dans un plan perpendiculaire à l'axe central (Z) du dispositif capteur de couple (10, 10') dans une direction tangentielle par rapport au premier ensemble (12) jusqu'à une position cible.

10. Procédé selon la revendication 9,
la deuxième partie de boîtier (18) étant au moins partiellement ouverte sur au moins une face inférieure et sur un côté, et
lors du pré-montage à l'étape b), au moins le premier conducteur de flux (19, 19') et/ou le deuxième conducteur de flux (20, 20') sont introduits dans la deuxième partie du boîtier (18) par le dessous ouvert ou par le côté ouvert.

11. Procédé selon la revendication 10, dans lequel
à l'étape c1), le deuxième module préassemblé (11, 11') est aligné de telle sorte que, dans la position d'engagement du deuxième module préassemblé (11, 11'), le côté ouvert de la deuxième partie du boîtier (18, 18') s'étende au moins sensiblement orthogonalement à la direction de déplacement, et
à l'étape c2), lors du déplacement dans le sens tangentiel, le deuxième ensemble préassemblé (11, 11') est déplacé avec le côté ouvert en avant de la position d'engagement vers la position cible.

12. Procédé selon la revendication 7 ou 8, l'assemblage à l'étape c) s'effectuant en
dans une première étape c1), le premier ensemble préassemblé (12') et le deuxième ensemble préassemblé (11", 11‴) sont mis en contact l'un avec l'autre dans une position d'engagement, et
dans une étape supplémentaire c2), le deuxième ensemble préassemblé (11", 11‴) est déplacé dans un plan perpendiculaire à l'axe central (Z) du dispositif capteur de couple (10", 10‴) dans le sens radial par rapport au premier ensemble (12') jusqu'à une position cible.

13. Procédé selon la revendication 12,
la deuxième partie de boîtier (18') étant partiellement ouverte au moins sur une face inférieure, et
dans lequel, lors du pré-montage à l'étape b), au moins le premier conducteur de flux (19", 19‴) et/ou le deuxième conducteur de flux (20", 20‴), en particulier l'ensemble des conducteurs de flux (19", 20" ; 19‴, 20"') est introduit dans la deuxième partie du boîtier (18') par la face inférieure ouverte.

14. Procédé selon la revendication 12 ou 13, dans lequel
à l'étape c1), le deuxième sous-ensemble préassemblé (11", 11‴) est aligné de telle sorte que, dans la position d'engagement du deuxième sous-ensemble préassemblé (11", 11‴), la face inférieure ouverte s'étende au moins sensiblement orthogonalement à la direction de déplacement, et
à l'étape c2), lors du déplacement dans la direction radiale, le deuxième ensemble préassemblé (11", 11‴), avec la face inférieure ouverte en avant, est déplacé de la position d'engagement vers la position cible.

15. Procédé selon l'une des revendications 7 à 14,
dans lequel l'agencement de capteurs magnétiques comprend en outre une carte de circuit imprimé (15, 15') et au moins un capteur magnétique (16, 17) est fixé à la carte de circuit imprimé (15, 15'),
la carte de circuit imprimé (15, 15') comportant un évidement (29, 29') ou une zone d'épaisseur réduite par rapport à une zone environnante,
le ou les capteurs magnétiques (16, 17) fixés à la carte de circuit imprimé (15, 15') étant disposés dans la zone de l'évidement (29, 29') ou dans la zone à épaisseur réduite, et
l'assemblage du premier module préassemblé (12, 12') et du deuxième module préassemblé (11, 11', 11") 11") à l'étape c) s'effectue de telle sorte qu'après l'introduction d'au moins un capteur magnétique (16, 17) de l'agencement de capteurs magnétiques dans l'interstice (S) entre les surfaces de transmission (26, 26') du premier conducteur de flux (19, 19', 19", 19"') et du deuxième conducteur de flux (20, 20', 20", 20‴) se trouve également dans l'espace (S) entre les surfaces de transmission (26, 26') des deux conducteurs de flux (19, 19', 19", 19"'; 20, 20', 20", 20‴
